# EUROPEAN PATENT SPECIFICATION

(11) **EP 2 493 291 B1**
(45) Date of publication and mention of the grant of the patent: **22.05.2019**
(21) Application number: 10827405.1
(22) Date of filing: 26.10.2010
(51) Int. Cl.: A01N 25/12, C08L 101/00, A01N 25/24, A01N 25/30, A01N 25/22

(54) **PEHAM DENDRIMERS FOR USE IN AGRICULTURE**
PEHAM-DENDRIMERE FÜR LANDWIRTSCHAFTLICHE NUTZUNG
DENDRIMÈRES POLYÉTHER-HYDROXYLAMINE (PEHAM) DESTINÉS À ÊTRE UTILISÉS EN AGRICULTURE

(30) Priority: 26.10.2009 US 254985 P; 31.10.2009 US 256951 P
(43) Date of publication of application: 05.09.2012
(73) Proprietor: Dendritic Nanotechnologies, Inc., Midland, MI 48642 (US); Priostar Pty Ltd, Abbotsford, VIC 3067 (AU)
(72) Inventor: HAYES, Rayan, Terrell, Barrien Springs, MI 49103 (US); OWEN, James, David, Vermont South, VIC 3133 (AU); CHAUHAN, Abhay, Singh, Mt. Pleasant, MI 48858 (US); PULGAM, Veera, Reddy, Mt. Pleasant, MI 48858 (US)
(74) Representative: Dehns
(86) International application number: PCT/US2010/054164
(87) International publication number: WO 2011/053605

(56) References cited:
- US-A- 5 834 020
- US-A1- 2007 244 296
- US-A1- 2007 248 006
- US-A1- 2007 298 006
- US-A1- 2009 137 667

## Description

### BACKGROUND OF THE INVENTION

### Field of the Invention

This invention relates broadly to the use of PEHAM dendrimers in agricultural applications, but more specifically for the protection and treatment of plants and seeds with specific PEHAM dendrimers.

### Description of Related Art

Dendrimers are highly branched, often spherical molecules in which branches may terminate at charged amino groups that radiate from a central core molecule. Amine-terminated dendrimers have a high density of positively charged amine groups on the surface, such as with PAMAM dendrimers. Due to controlled chemical synthesis, dendrimers have a very precise size and defined shape.

PEHAM dendrimers are related to PAMAM dendrimers but differ in at least one or more of the following characteristics: PEHAM dendrimers show increased thermal stability, more rapid building of surface functionality with increased molecular weight at lower generations thereby reducing costs to make, narrow polydispersity, increased interior void volume, have interior functionality and/or extender groups in the branch arms. These PEHAM dendrimers are described in US Serial No. 10/594,776, filed 20 April 2005 and US 11/630,044, filed December 21, 2005.

It is known that various desired active moieties that are used in agriculture lose effectiveness or require repeated application due to various environmental conditions. The following references discuss some of these issues. When a plant is treated with an active moiety in a carrier, such as spraying it on the plant leaves, the problems observed are uptake and translocation of the desired active moiety or photodegradation of the active. Various attempts have been used to minimize such results such as by adding a surfactant such as Ethylan™ TU [Baker, Edward A., et al., Pestic. Sci. 34, 167-182 (1992)], or an organosilicone surfactant [Stevens, Peter J. G., et al. Pestic. Sci. 38, 237-245 (1993)], or Tinopal™ [Reddy, N. P., et al., Pest Manag. Sci. 64, 909-915 (2008)]. Other approaches concern improving retention on the leaves by adding cuprous oxide and copper oxychloride with a dispersing agent [Large, E. C. et al., Annals of Applied Biol., 33(1), 54-63 (1945), improving local distribution on the leaves by water [Hislop, E. C. et al., Ann. Appl. Biol. 66, 89-101 (1970)], penetration of intact leaf cuticles by various herbicides was measured and found low for several actives [Baker, Edward A., Pestic. Sci. 29, 187-196 (1990)], and imazaquin spray retention, foliar washoff and runoff losses under rainfall conditions was determined which was quite high [Reddy, Krishna N., et al., Pestic. Sci. 48, 179-187 (1996)].

Additionally, UV light causing photodegradation of the active has been studied to try to minimize this effect on loss of active efficacy by several groups, such as to protect amphotericin B [Tufteland, Megan L. et al., Pest Manag. Sci. 65, 624-628 (2009)], rimsulfuron [Scrano, Laura et al., Pestic. Sci. 55, 995-961 (1999)], fenarimol [Sur, Nivedita et al., Pest Manag. Sci. 56, 289-292 (2000)], flucythrinate [Chattopadhyhya S. et al., Pestic. Sci. 31, 163-173 (1991)], phosalone [Walia, S. et al., Pestic. Sci. 25, 1-9 (1989)], fluchloralin [Saha, Tapas et al., Pest Manag. Sci. 58, 179-182 (2001)], flumioxazin [Kwon, Jeong-Wook, et al., Pest Manag. Sci. 60, 939-943 (2004)], bensulfuron-methyl [Si, You-Bin, et al., Pest Manag. Sci. 60, 286-290 (2003)], benzoylphenylurea [Marsella, Adam, et al., Pest Manag. Sci. 56, 789-794 (2000)], and vinclozolin [Schick, Bernhard et al., Pestic. Sci. 55, 1116-1122 (1999)]. A method is to shield the active from UV such as by nanoparticle carriers of hollow silica nanoparticles [Li, Zhu-Zhu et al., Pest Manag. Sci. 63, 241-246 (2007)], using absorber compounds [Hussain, Manzoor et al., Pestic. Sci. 28, 345-355 (1990)], glufosinate [Kocher, Helmut et al., Pestic . Sci. 37, 155-158 (1993)], and 2-propanol and methyl 12-hydroxystearate [Schwack, Wolfgang et al., Pestic. Sci. 40, 279-284 (1994)].

US Patent 6,939,831 describes the use of dendrimers having 2-20,000 phosphorous to nitrogen bonds with active moieties in agriculture. This composition is always a gel composition which limits its method of application.

These known decreases in the usefulness of an agricultural active moiety cause the requirement for repeated application of the active moiety to the plant, which adds costs for these repeated applications and environmental issues for the runoff or soil retention of the the agricultural active moiety.

Clearly, a way to deliver active moieties to plants, while reducing the UV effect for degradation, increasing the solubility and penetration of the active moiety, reducing the amount of active to apply or avoiding repeated applications to lower the environmental impact, is desired.

### BRIEF SUMMARY OF THE INVENTION

The present invention provides a selection of the previously known PEHAM dendritic polymers. These PEHAM dendritic polymers of the present invention comprise a dendrimer of the structure: 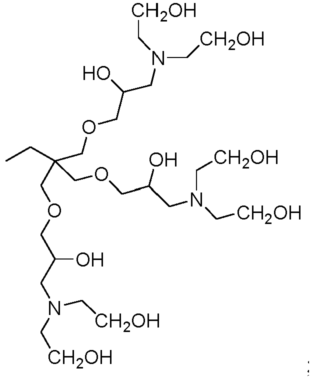 and
associated with at least one agriculturally active entity selected from the atrazine and glyphosate; and
at least one agriculturally-acceptable diluent or carrier is present; and wherein the efficacy or duration of activity of the agriculturally active entity is increased.

These specific PEHAM dendrimers are used in a formulation with at least one agriculturally active entity for agricultural purposes, particularly for increasing the efficacy of the agriculturally active entity in various ways. Especially these formulations are useful by improving solubility of the agriculturally active entity in the formulation, by improving adhesion and penetration of the agriculturally active entity to plant surfaces, by improving the water-fastness of the agriculturally active entity to the plant or seed, by providing protection of the agriculturally active entity from UV damage, by increasing soil penetration of the agriculturally active entity to reach the plant roots or under soil parts, or by reducing soil adhesion of the agriculturally active entity to reach the plant roots or under soil parts, or reducing enzymatic degradation of the agriculturally active entity by the plant or seed or microorganisms in the soil. These improvements in the formulation enable lower amounts of the agriculturally active entity to be applied or reduce the number of repeat applications of the formulation, which reduces the environmental impact of the formulation and agriculturally active entity.

### DETAILED DESCRIPTION OF THE INVENTION

### Glossary

The following terms as used in this application are to be defined as stated below and for these terms, the singular includes the plural.
amu means atomic mass units
BR or (BR) means a branch cell
C or (C) means a core of a dendrimer or dendron
*m*-CPBA means *meta*-chloroperoxy benzoic acid
DCM means dichloromethane
DEA means diethanolamine
DEIDA means diethyliminodiacetate
DETA means diethylenetriamine
DBA means dibenzylamine
DI means deionized water
DMI means dimethylitaconate
DMSO means dimethylsulfoxide
EA means ethanolamine
EDA means ethylenediamine
EPC means ethyl-N-piperazinecarboxylate
EPI means epichlorohydrin, usually further distilled prior to use
Et means ethyl
EtOH means ethanol
EX or (EX) means an extender
FF or (FF) means a focal point functionality component of a core
G means dendrimer generation, which is indicated by the number of concentric branch cell shells surrounding the core (usually counted sequentially from the core)
g means gram(s)
h means hour(s)
HPLC means high pressure liquid chromatography
IDADS means iminodiacetic acid disodium salt
IDA means iminodiacetic acid
IF or (IF) means interior functionality
IMAE means 2-imidazolidyl-1-aminoethane
IR (or FTIR) means infrared spectrometry
L means liter(s)
MeOH means methanol
mg means milligram(s)
min means minute(s)
mL means milliliter(s)
MWA means microwave assisted
N-SIS means nanoscale sterically induced stoichiometry
PAMAM means poly(amidoamine), including linear and branched polymers or dendrimers with primary amine terminal groups
PEHAM means poly(etherhydroxylamine) dendrimer
PEI means poly(ethyleneimine)
PETAE means pentaerythritol tetraallyl ether
PETGE means pentaerythritol tetraglycidyl ether
Percent or % means by weight unless stated otherwise such a weight/volume (w/v) etc
PIPZ means piperazine
POPAM means a PPI core surrounded by PAMAM dendrons
PPI means poly(propyleneimine)
RT means ambient temperature or room temperature, about 20-25°C
SEC means size exclusion chromatography
SIS means sterically induced stoichiometry
TF means a terminal functionality
TLC means thin layer chromatography
TMPTGE means trimethylolpropane triglycidyl ether
TREN means *tris*(2-aminoethyl)amine
TRIS means *tris*(hydroxymethyl)aminomethane
UF means ultrafiltration separation
UV-vis means ultraviolet and visible spectroscopy

Bioavailability of agrochemicals often needs a specific optimization to ensure best biological efficacy at the lowest possible application rate and the lowest impact on the environment. The application of the formulation must still have even distribution on the crop, easy dilution with water (the preferred solvent for farmers), optimal biological performance, easy and safe handling for the workers, and lowest possible environmental impact. This has proven to be difficult to achieve as the climate, crops, pests, and soil varies widely over the growing regions.

Formulations used in agriculture comprise: an active ingredient (where its properties greatly influence what form the formulation can be, such as solubility, lipophilicity, hydrolytic stability, photodegradation, *etc*.), other ingriedents such as surfactants, carriers, excipients (the role of the present dendrimer as a carrier for the active but it also does more than this function). The formulation type is dependent on the intended biological target and the method of application needed. Usual formulations types are: WG - Water dispersible Granule; SC - Suspension Concentrate; EC - Emulsifiable Concentrate; and OD - Oil Dispersion.

This invention describes PEHAM dendrimer formulations that are useful in agricultural applications such as regulating and controlling the development of plants, seeds, insects, microbes or animal pests.

Some aspects of this invention concern increasing the efficacy of the agriculturally active entity in various ways, such as by improving solubility of the agriculturally active entity in the formulation, by improving adhesion of the agriculturally active entity to plant surfaces, by improving the water-fastness (including rain-fastness to the active entity being washed off the plant by rain) of the agriculturally active entity to the plant or seed, by improving the penetration (absorption) of agriculturally active entity into plant tissues, by providing protection of the agriculturally active entity from UV damage, by increasing soil penetration of agriculturally active entity to reach the plant roots or under soil parts, or by reducing soil adhesion of the agriculturally active entity to reach the plant roots or under soil parts, or reducing enzymatic degradation of the agriculturally active entity by the plant or seed or microorganisms in the soil.

### Chemical structures of PEHAM Dendritic Polymers

PEHAM dendritic polymer structures may be dendrimers, dendrons, dendrigrafts, tecto(dendritic) polymers or other dendritic architectures. There are numerous examples of such dendritic polymers in the literature, such as those described in Dendrimers and other Dendritic Polymers, eds. J.M.J. Fréchet, D. A. Tomalia, pub. John Wiley and Sons, (2001) and other such sources.

These PEHAM dendritic polymers can be any physical shape, such as for example spheres, rods, tubes, or any other shape possible. The interior structure may have an internal cleavable bond (such as a disulfide), void volume for encapsulation, or an internal functionality (IF) such as a hydroxide or other group to associate with an active ingredient. Additionally, the PEHAM dendritic polymer can be a dendron. This dendron can have any dendritic polymer constituents desired.

The dendritic polymers of this invention are PEHAM dendrimers including PEHAM dendrons. These PEHAM dendrimers have the structures as discussed above and further described below.

### General Syntheses Used to Prepare PEHAM Dendritic Polymers

1. PEHAM dendritic polymers of the present invention have the following structure:

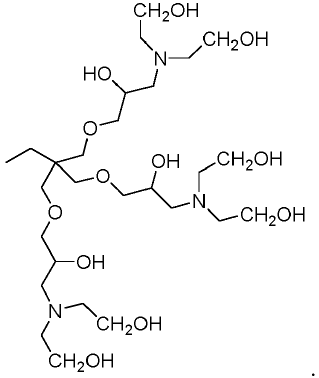

The PEHAM can be prepared by an acrylate-amine reaction system which comprises:
A. Reacting an acrylate functional core with an amine functional extender, such as shown below:

   (C) + (EX) → (C) (EX) (TF)

   where (C) = an acrylate functional core such as TMPTA; (EX) = an amine functional extender such as PIPZ; and (TF)=amine; and
B. Reacting an amine functional extended core reagent of (C) (EX) (TF1) with an acrylate functional branch cell reagent (BR) as shown below:

   (C) (EX) (TF1) + (BR) →(C) (EX) (BR) (TF2)

   where (C) = TMPTA; (EX) = PIPZ; (TF1) = Amine; (BR) = TMPTA; and (TF2) = Acrylate; and
wherein for both Steps A and B
the addition of an extender (EX) group to a core, the mole ratio of (EX)/(C) is defined as the moles of extender molecules (EX) to the moles of reactive functional groups on the simple core, scaffolding core, super core, or current generation structure (*i.e.* N_{c}) where an excess of (EX) is used when full coverage is desired;
the addition of a branch cell (BR) to a simple core, scaffolding core, super core, or current generation structure (BR)/(C) is defined as the moles of branch cell molecules (BR) to the moles of reactive functional groups on the simple core, scaffolding core, super core, or current generation structure *(i.e.* N_{c}) where an excess of (BR) is used when full coverage is desired; and
the level of addition of branch cells (BR) or extenders (EX) to a core, scaffolding core, super core or current generational product can be controlled by the mole ratio added or by N-SIS.

A process to prepare the dendritic polymers of the invention can be by ring-opening reaction system which comprises:
A. Reacting an epoxy functional core with an amine functional extender, such as shown below:

   (C) + (EX) → (C) (IF1) (EX) (TF1)

   where (C) = an epoxy functional core such as PETGE; (IF1) = Internal hydroxyl (OH); (EX) = Piperazine (PIPZ); (TF1) = Amine; and
B. Reacting an amine functional extended core reagent (C) (IF1) (EX) (TF1) with an epoxy functional branch cell reagent such as shown below:

   (C) (IF1) (EX) (TF1) + (BR) → (C) (IF1) (EX) (IF2) (BR) (TF2)

   where (C) = PETGE; (IF1) = Internal functionality moiety as defined in Claim 1 such as OH; (EX) = an extender moiety as defined in Claim 1 such as PIPZ; (TF1) = Amine; (BR) = an epoxy functional branch cell reagent such as PETGE; and (IF2) = Internal functionality moiety as defined in Claim 1 such as OH; (TF2) = Amine; and
wherein for both Steps A and B
the addition of an extender (EX) group to a core, the mole ratio of (EX)/(C) is defined as the moles of extender molecules (EX) to the moles of reactive functional groups on the simple core, scaffolding core, super core, or current generation structure *(i.e.* N_{c}) where an excess of (EX) is used when full coverage is desired;
the addition of a branch cell (BR) to a simple core, scaffolding core, super core, or current generation structure (BR)/(C) is defined as the moles of branch cell molecules (BR) to the moles of reactive functional groups on the simple core, scaffolding core, super core, or current generation structure *(i.e.* N_{c}) where an excess of (BR) is used when full coverage is desired; and
the level of addition of branch cells (BR) or extenders (EX) to a core, scaffolding core, super core or current generational product can be controlled by the mole ratio added or by N-SIS.

An orthogonal chemical approach is the 1,3-dipolar cyclo-addition of azides containing (C) and (BR) to alkynes containing (C) and (BR). The alkyne containing (C) may have from 1 to N_{c} alkyne moieties present and alkyne containing (BR) may have from 1 to N_{b}-1 alkyne moieties. The other reactive groups present in (C) or (BR) can be any of the (BR) groups listed herein before. Azide containing (C) and (BR) are produced by nucleophilic ring-opening of epoxy rings with azide ions. Subsequent reaction of these reactive groups can provide triazole linkages to new (BR) or (TF) moieties using "click" chemistry as described by Michael Malkoch et al., in J.Am.Chem.Soc. 127, 14942-14949 (2005).

WO 2007/149501 teaches a MWA synthesis that exhibits unexpected and dramatic advantages compared to thermal processing. It was observed that MWA produced higher purity dendritic polymer products (*i.e*., dendrimers/dendrons) under more mild conditions, shorter reaction times (minutes versus days), while requiring only stoichiometric amounts or slight excess of reacting reagents. The dendritic polymer as the starting material or a desired (C) is reacted with a BR or EX to obtain the desired dendritic polymer product. Suitable solvents can be used if the reactant does not also serve as the solvent. The mild conditions for the reaction compared to that of the prior thermal reaction leads to less byproducts, fewer steps for purification of the desired dendritic polymer product. The reaction times are significantly reduced compare to the prior thermal process. Thus this MWA synthesis is less expensive to run to make the product desired.

Any of these above process can be used to make the PEHAM dendrimers employed in the present invention

These dendrimers a selection invention of the PEHAM dendrimers of US Serial No. 10/594,776, filed 20 April 2005 and US 11/630,044, filed December 21, 2005, are surprisingly effective for use in these agricultural formulations. Their size, higher (TF) for their low G keeps costs lower, easier to make, and conveys desirable properties for such formulations.
The agriculturally active entity that is encapsulated or associated with these dendrimers is selected from the atrazine and glyphosate.

The PEHAM dendritic polymers of Formula (I) can be useful as: surface conjugated or surface associated carriers (such as possible from their shape variants of ellipsoids, spheres, rods, random hyperbranched, dendrigrafts, core-shell tecto dendrimers) which can be further modified by the variety of surface groups (TF) present; encapsulated carriers (whether the agriculturally active entity is associated with the interior (IF) or simply entrapped) for use in a time release agriculturally active formulation, having cleavable linkages in the structure of the dendritic polymer for time release and pH or other desired changes once applied, solubility differences between the interior and surface of the dendritic polymer, quantity of agriculturally active entity possible per PEHAM dendritic polymer because of generation or shape; and precision in their size enables use as molecular size standards, calibrating agents, and pore-forming templates for penetration of the plant such as the leaves or seed such as its coating.

The agriculturally active entity is associated with the interior, surface or both the interior and surface of these PEHAM dendrimers and the groups may be the same or different. As used herein "associated with" means that the agriculturally active entity(s) can be physically encapsulated or entrapped within the interior of the dendrimer, dispersed partially or fully throughout the dendrimer, or attached or linked to the dendrimer or any combination thereof, whereby the attachment or linkage is by means of covalent bonding, hydrogen bonding, adsorption, absorption, metallic bonding, van der Walls forces or ionic bonding, or any combination thereof. The association of the agriculturally active entity(s) and the dendrimer(s) may optionally employ connectors and/or spacers or chelating agents to facilitate the preparation or use of these formulations. Suitable connecting groups are groups which link a targeting director *(i.e.,* T) to the dendrimer *(i.e.,* D) without significantly impairing the effectiveness of the director or the effectiveness of the agriculturally active entity(s) present in the combined dendrimer and agriculturally active entity. These connecting groups may be cleavable or non-cleavable and are typically used in order to avoid steric hindrance between the target director and the dendrimer; preferably the connecting groups are stable (*i.e.,* non-cleavable) unless the site of delivery would have the ability to cleave the linker present (*e.g.,* an acid-cleavable linker for release at the cell surface or in the endosomal compartment). Since the size, shape and functional group density of these dendrimers can be rigorously controlled, there are many ways in which the agriculturally active entity can be associated with the dendrimer. For example, (a) there can be covalent, coulombic, hydrophobic, or chelation type association between the agriculturally active entity(s) and entities, typically functional groups, located at or near the surface of the dendrimer; (b) there can be covalent, coulombic, hydrophobic, or chelation type association between the agriculturally active entity(s) and moieties located within the interior of the dendrimer; (c) the dendrimer can be prepared to have an interior which is predominantly hollow (*i.e.,* solvent filled void space) allowing for physical entrapment of the agriculturally active entity within the interior (void volume), wherein the release of the agriculturally active entity can optionally be controlled by congesting the surface of the dendrimer with diffusion controlling moieties, (d) where the dendrimer has internal functionality groups (IF) present which can also associate with the agriculturally active entity, possesses a cleavable (IF) which may allow for controlled (*i.e.,* pH dependent) exiting from the dendrimer interior or (e) various combinations of the aforementioned phenomena can be employed.

The formulation of this invention comprises at least one PEHAM dendrimer associated with at least one agriculturally active entity. Both of these components can have more than one type present; thus more than one PEHAM dendrimer and more than one agriculturally active entity can be present in a formulation.

The formulation also has at least one agriculturally-acceptable diluent or carrier present. Which agriculturally-acceptable diluent or carrier is used depends on the end use or climatic and/or edaphic conditions. Some of these diluents or carriers are any solid or liquid additives corresponding to the usual formulation techniques which are acceptable for uses for agriculture and can be formulated as liquids, sprays, oils, emulsions, suspensions, granules, powders, dusts, and other customary formulations.

Other customary additives may also be present such as adjuvants, anticaking agents; colorants, thickeners, surfactants, antifoaming compounds, detergents such as alkaline-earth metal salts, dispersants, alkalinizing agents such as bases, bonding agents, emulsifiers, oxidizing agents such as free radical scavengers or catalytic destroyers of hydroperoxides, anticorrosive agents, attractants and/or food substances for the preparation of insecticide baits in particular. These additives may be present in the formulations according to the invention in quantities of between 0 and 75% by weight of said formulations.

Also according to the needs, the nature of the diseases to be treated, of the insect and/or animal pests and/or of the weed plants to be controlled, destroyed or eradicated, the levels of infestation of these pests, the climatic and/or edaphic conditions, the formulations according to this invention may contain one or more agriculturally active entity of the type including fungicides and/or insecticides and/or acaricides and/or rodenticides and/or nematocides and/or insect and/or animal pest repellents and/or agents regulating the development of plants and/or insects and/or one or more herbicide active substances.

This formulation is used in a method for treating plants or seeds with such a formulation as described above, preferably with an adjuvant and/or carrier for ease of application, for improving adhesion of the agriculturally active entity to plant surfaces, improving rain-fastness of the agriculturally active entity to the plant or seed, protection of the agriculturally active entity from UV damage by use of the formulation, protection of the plant or seed from UV damage by use of the formulation , increasing soil penetration of the agriculturally active entity or reducing soil adhesion of the agriculturally active entity such that it can reach the plant roots or under soil parts, or reducing enzymatic degradation of the agriculturally active entity by the plant or seed or microorganisms in the soil. These methods enable reduction in loss of the agriculturally active entity into the environment such as water runoff, lower the amount of application required of the agriculturally active entity agriculturally active entity while maintaining the effectiveness of the agriculturally active entity, and permit better dispersion and reduced viscosity of the formulation so that the agriculturally active entity is more efficiently and effectively use.

While not wishing to be bound by theory, it is believed that PEHAM dendrimers provide the increased solubilization of the agriculturally active entity, and/or reduced viscosity and/or better dispersion by a variety of methods, such as absorbing the UV photons by the dendritic macromolecule to reduce photodegradation of the agriculturally active entity, increase the solubility by encapsulating the less soluble agriculturally active entity where the dendrimer surface is more highly soluble in the desired environment, using surface chemistry of the PEHAM dendrimer it can penetrate the soil, roots, leaves and seeds such as the coating to reach the cells or treat the pests such that rain-run off of the agriculturally active entity is reduced. When the surface groups on the dendrimer are modified as the (TF) or by the agriculturally active entity, the adhesion to the surface of leaves, seeds and other surfaces is provided.

While not wishing to be bound by theory, it is believed that the PEHAM dendrimers of Formula (I) either associate with the agriculturally active entity or act as an excipient that enhances the named properties of the formulation.

### Equipment and Methods

### Size Exclusion Chromatography (SEC)

A methanolic solution of Sephadex™ (Pharmacia) purified dendrimer was evaporated and reconstituted with the mobile phase used in the SEC experiment (1 mg/mL concentration). All the samples were prepared fresh and used immediately for SEC.

Dendrimers were analyzed qualitatively by the SEC system (Waters 1515) operated in an isocratic mode with refractive index detector (Waters 2400 and Waters 717 Plus Auto Sampler). The analysis was performed at RT on two serially aligned TSK gel columns (Supelco), G3000PW and G2500PW, particle size 10 µm, 30 cm × 7.5 mm. The mobile phase of acetate buffer (0.5M) was pumped at a flow rate of 1 mL/min. The elution volume of dendrimer was observed to be 11-16 mL, according to the generation of dendrimer.

### High Pressure/Performance Liquid Chromatography (HPLC)

High pressure liquid chromatography (HPLC) was carried out using a Perkin Elmer™ Series 200 apparatus equipped with refractive index and ultraviolet light detectors and a Waters Symmetry® C₁₈ (5 µm) column (4.6 mm diameter, 150 mm length). A typical separation protocol was comprised of 0.1% aqueous acetic acid and acetonitrile (75:25% v/v) as the eluant and UV light at λ = 480 nm as the detector.

### Thin Layer Chromatography (TLC)

Thin Layer Chromatography was used to monitor the progress of chemical reactions. One drop of material, generally 0.05M to 0.4M solution in organic solvent, is added to a silica gel plate and placed into a solvent chamber and allowed to develop for generally 10-15 mins. After the solvent has been eluted, the TLC plate is generally dried and then stained (as described below). Because the silica gel is a polar polymer support, less polar molecules will travel farther up the plate. "R_{f}" value is used to identify how far material has traveled on a TLC plate. Changing solvent conditions will subsequently change the R_{f} value. This R_{f} is measured by the ratio of the length the product traveled to the length the solvent traveled.

Materials: TLC plates used were either (1) "Thin Layer Chromatography Plates - Whatman®" PK6F Silica Gel Glass backed, size 20 x 20 cm, layer thickness: 250 µm or (2) "Thin Layer Chromatography Plate Plastic sheets - EM Science" Alumina backed, Size 20 x 20 cm, layer thickness 200 µm.

Staining conditions were: (1) Ninhydrin: A solution is made with 1.5 g of ninhydrin, 5 mL of acetic acid, and 500 mL of 95% ethanol. The plate is submerged in the ninhydrin solution, dried and heated with a heat gun until a color change occurs (pink or purple spots indicate the presence of amine). (2) Iodine Chamber: 2-3 g of I₂ is placed in a closed container. The TLC plate is placed in the chamber for 15 mins. and product spots will be stained brown. (3) KMnO₄ Stain: A solution is prepared with 1.5 g of KMnO₄, 10 g of K₂CO₃, 2.5 mL of 5% NaOH, and 150 mL of water. The TLC plate is submerged in KMnO₄ solution and product spots turn yellow. (4) UV examination: An ultraviolet (UV) lamp is used to illuminate spots of product. Short wave (254 nm) and long wave (365 nm) are both used for product identification.

### MALDI-TOF Mass Spectrometry

Mass spectra were obtained on a Bruker Autoflex™ LRF MALDI-TOF mass spectrometer with Pulsed Ion Extraction. Mass ranges below 20 kDa were acquired in the reflector mode using a 19 kV sample voltage and 20 kV reflector voltage. Polyethylene oxide was used for calibration. Higher mass ranges were acquired in the linear mode using a 20 kV sample voltage. The higher mass ranges were calibrated with bovine serum albumin.

Typically, samples were prepared by combining a 1 µL aliquot of a 5 mg/mL solution of the analyte with 10 µL of matrix solution. Unless otherwise noted, the matrix solution was 10 mg/mL of 2,5-dihydroxybenzoic acid in 3:7 acetonitrile:water. Aliquots (2 µL) of the sample/matrix solution were spotted on the target plate and allowed to air dry at RT.

### Ultrafiltration Separation (UF)

A typical ultrafiltration separation protocol was as follows: A mixture of product and undesired compounds was dissolved in the appropriate volume of a solvent for this mixture (*e.g.,* 125 mL of MeOH) and ultrafiltered on a tangential flow UF device containing 3K cut-off regenerated cellulose membranes at a pressure of 20 psi (137.9 kPa) at 25°C. The retentate volume as marked in the flask was maintained at 100-125 mL during the UF collection of 1500 mL permeate (∼ 5 hours). The first liter of permeate was stripped of volatiles on a rotary evaporator, followed by high vacuum evacuation to give the purified product. Depending on the specific separation problem, the cut-off size of the membrane (*e.g.,* 3K, 2K or 1K) and the volume of permeate and retentate varied.

### Sephadex™ Separation

The product is dissolved in the minimum amount of a solvent (water, PBS, or MeOH) and purified through Sephadex™ LH-20 (Pharmacia) in the solvent. After eluting the void volume of the column, fractions are collected in about 2-20 mL aliquots, depending on the respective separation concerned. TLC, using an appropriate solvent as described before, is used to identify fractions containing similar product mixtures. Similar fractions are combined and solvent evaporated to give solid product.

### Nuclear Magnetic Resonance (NMR) - ¹H and ¹³C

### Sample preparation:

To 50-100 mg of a dry sample was added 800-900 µL of a deuterated solvent to dissolve. Typical reference standards are used, *i.e*., trimethylsilane. Typical solvents are CDCl₃, CD₃OD, D₂O, DMSO-d₆, and acetone-d₆. The dissolved sample was transferred to an NMR tube to a height of ∼ 5.5 cm in the tube.

Equipment: (1) 300MHz NMR data were obtained on a 300MHz 2-channel Varian™ Mercury Plus NMR spectrometer system using an Automation Triple Resonance Broadband (ATB) probe, H/X (where X is tunable from ¹⁵N to ³¹P). Data acquisition was obtained on a Sun Blade™ 150 computer with a Solaris™ 9 operating system. The software used was VNMR v6.1C. (2) 500MHz NMR data were obtained on a 500MHz 3-channel Varian™ Inova 500MHz NMR spectrometer system using a Switchable probe, H/X (X is tunable from ¹⁵N to ³¹P). Data acquisition was obtained on a Sun Blade™ 150 computer with a Solaris™ 9 operating system. The software used was VNMR v6.1C.

### Infrared Spectrometry (IR or FTIR)

Infrared spectral data were obtained on a Nicolet Fourier™ Transform Infrared Spectrometer, Model G Series Omnic, System 20 DXB. Samples were run neat using potassium bromide salt plates (Aldrich).

### Ultraviolet/Visible Spectrometry (UV/Vis)

UV-VIS spectral data were obtained on a Perkin Elmer™ Lambda 2 UV/VIS Spectrophotometer using a light wavelength with high absorption by the respective sample, for example 480 or 320 nm.

The invention will be further clarified by a consideration of the following examples, which are intended to be purely exemplary of the present invention.

### Example 1 (outside scope of the invention): Reaction of pentaerythritol tetraglycidylether 1 with tris(2-aminoethyl)amine (TREN) 2 to produce primary amine surface

### [(C) = PETGE; (IF1) = OH; (BR1) = TREN; (TF) = Primary NH₂; G=1]

To a 50-mL round bottom flask containing a stir bar was added TREN **2** (16.0 g, 109 mmol, 10 equiv. per epoxide) and 4 mL of MeOH and cooled to ∼25°C. To this stirred mixture was added dropwise a solution of PETGE **1** (1.0 g, 2.78 mmol, 11.1 mmol epoxide) in 2 mL of MeOH. This mixture was stirred for 24 h at 25°C under a N₂ atmosphere. Volatile material was distilled by rotary evaporation to give a crude residue that was bulb-to-bulb distilled using a Kugelrohr apparatus at 200-230°C at high vacuum to give 2.4 g residue. MALDI-TOF mass spectrum of this material showed a clean spectrum for the desired 4:1 adduct at a mass of 967 amu [M+Na]⁺ and a smaller signal for the 3:1 adduct at 799 amu [M+Na]⁺. TLC (50% NH₄OH in MeOH) showed the absence of TREN. ¹³C NMR spectrum showed the expected peaks for a clean product **3** (2.4 g, 92% yield). Its spectra are as follows:
¹³C NMR: (125 MHz, CDCl₃) δ 39.63, 35.36, 47.30, 52.64, 54.01, 57.24, 68.10, 70.33, 74.64; and
MALDI-TOF MS: C₄₂H₁₀₁N₁₆O₈; Calc. 944.3, found 967 [M+Na]⁺ amu.

The following Scheme 1 illustrates this reaction.

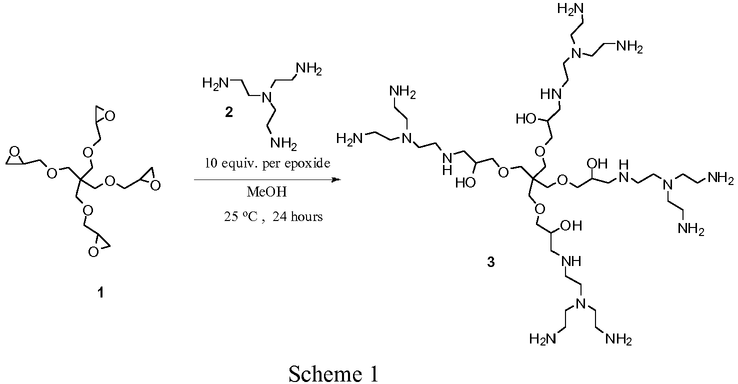

### Example 2: Ring-Opening Using a Dihydroxyl Amino Branch Cell Reagent: Hydroxyl Terminated PEHAM Dendrimer (G=1) from Trimethylolpropane Triglycidyl Ether and Diethanolamine

### [(C) = TMPTGE; (FF)=Et; (IF1) = OH; (BR1) = DEA; (TF) = OH; G=1]

DEA **5** (7.82 g, 74.47 mmol) (Aldrich) and 120 mL of dry MeOH (Aldrich), both without further purification, were placed in an oven dried 250-mL single necked round bottom flask. The flask was equipped with stir bar and septum. TMPTGE **4** (5 g, 16.55 mmol) was dissolved in 40 mL of dry MeOH and added dropwise to the above stirring solution through a pressure equalizing funnel over a period of 1 h at RT. The funnel was replaced with a refluxing condenser and heated at 60°C for 60 h under a N₂ atmosphere. Solvent was removed with a rotary evaporator under reduced pressure to give a colorless transparent liquid. The entire reaction mixture was transferred into a 100-mL single necked round bottom flask. Excess DEA **5** was separated by Kugelrohr distillation under reduced pressure at 180-190°C. The product, **6** (9.76 g ; 95.53% yield) was recovered as a transparent viscous liquid. Its spectra are as follows:
¹H NMR: (300 MHz, CD₃OD): δ 0.87 (t, J=7.50 Hz, 3H, CH₃), 1.43 (q, CH₂, J=7.20 Hz, 2H), 2.52-2.79 (m, 18H), 3.32 (s, 3H, 3 x OH), 3.50 (s, 6H), 3.40 (d, J=5.10 Hz, 6H), 3.54-3.67 (m, 12H), 3.93 (sextet, J=5.10 Hz, 3H), 4.85 (s, 6H, 6 x OH); and
¹³C NMR: (75 MHz, CD₃OD): δ 6.93, 22.76, 43.43, 57.42, 58.51, 59.47, 68.32, 71.56, 73.72; and
IR (Neat): λₘₐₓ 3354, 2939, 2817, 1454, 1408, 1367, 1321, 1280, 1111, 1081, 1070, 871, 778 cm⁻¹; and
MALDI-TOF MS: C₂₇H₅₉N₃O₁₂ Calc. 617; found 641 (*M*⁺Na) amu.

The following Scheme 2 illustrates this reaction:

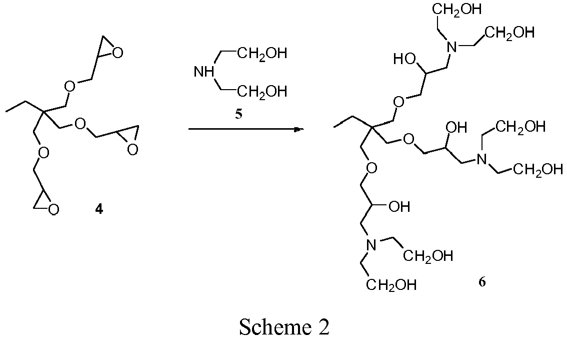

### Example 3 (outside scope of the invention): Reaction of pentaerythritol tetraglycidylether with diethyliminodiacetate (DEIDA)

### [(C) = PETGE; (IF1) = OH; (BR1) = DEIDA; (TF) = Ethyl ester; G=1.5]

To a solution of DEIDA, **7** (5.67 g, 30 mmol) (Aldrich) in 35 mL of EtOH (Aldrich) was added a solution of PETGE, **1** (1.8 g, 5 mmol, 20 epoxy mmol) in 20 mL of EtOH (Aldrich) dropwise over a period of 30 min through an addition funnel. The flask was arranged with a refluxing condenser, N₂ gas inlet and placed in a pre-heated oil bath at 60°C. After heating for 1 day, MALDI-TOF MS analysis showed the calculated mass for the perfect structure and the three-substituted products. Heating was continued for 36 h, then the solvent was removed on a rotary evaporator, giving a light brown colored liquid. Excess of DEIDA was distilled off by Kugelrohr distillation apparatus at 175°C to give a viscous liquid, which was identified as the desired product, **8** (4.99 g, 89.4 %). Its spectra are as follows:
¹H NMR (300 MHz, CD₃OD): δ 1.24-1.29 (24 H, t, J=7.20 Hz), 3.03-3.09 (4 H, dd, J=3.60 Hz), 2.78-2.85 (4 H, bt, J=9.0 Hz), 3.41 (12 H, s), 3.45 (8 H, s), 3.61 (8 H, d, J=5.40 Hz), 4.14-4.21 (16 H, q, J=6.60 Hz), 4.61-4.67 (4 H, sextet, J=4.20 Hz); and
¹³C NMR (75 MHz, CD₃OD): δ 13.41, 13.45, 45.89, 49.79, 53.65, 55.77, 56.21, 57.97, 60.57, 60.69, 68.71, 69.79, 69.93, 71.31, 73.55, 78.43, 78.46, 168.62, 170.26, 172.30; and
IR (Neat): vₘₐₓ3457, 2980, 2934, 2904, 2868, 1741, 1675, 1460, 1378, 1250, 1198, 1163, 1106, 1065, 1029, 927, 860, 819, 732 cm⁻¹; and
MALDI-TOF MS: C₄₉H₈₈N₄O₂₄ Calc. 1117.2; found 1117.7 [M]⁺, 1139.7 [M+Na]⁺ amu.

The following Scheme 3 illustrates this reaction.

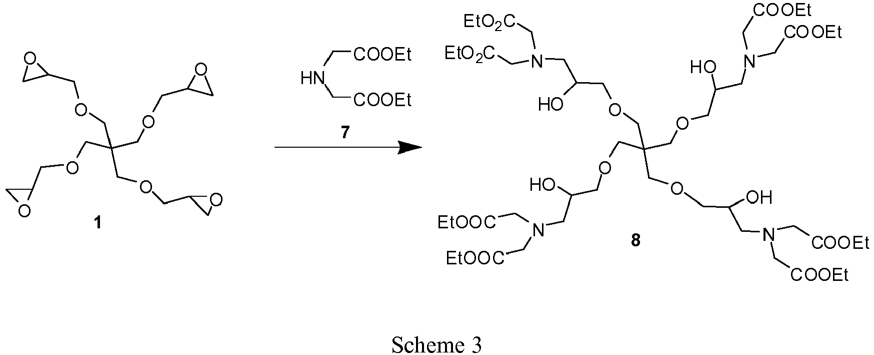

### Example 4 (outside scope of the invention): Ester Derivatives from Primary Amines

### A. Synthesis of Pentaerythritol Tetraglycidyl Ether from Pentaerythritol and Epichlorohydrin (EPI)

### [(C) = PETGE; (TF)=Epoxy]

This process was performed according to Mitsuo et al., Synthesis, 487 (1993). Pentaerythritol **9** (13.6 g, 400 mmol) and 100 mL DMSO were taken in a 1-L 3-necked round bottom flask and then KOH (52.7 g, 800 mmol, 2 equiv. per OH) added all at once. The reaction mixture was stirred vigorously with a mechanical stirrer and cooled to 15-20°C with an ice bath. EPI **10** (110.4 g or 93.55 mL, 1.2 mol, 3 equiv. per OH) in a pressure-equalizing funnel was added dropwise over a period of 150 min. The temperature was maintained at 15-20°C during the addition of EPI **10.** The color of the reaction mixture turned from colorless to pale yellow. After completing the addition, the reaction mixture was allowed to warm to RT and stirring continued overnight. Progress of the reaction was monitored by TLC. After 3 h, TLC indicated spots for PETGE **1** and pentaerythritol triglycidyl ether **11.** By continuing reaction, triglycidyl ether **11** was expected to be converted into product **1;** however, some dimerization of **1** was observed, which gave product **12.**

Reaction mixture was filtered through a Büchner funnel and solids were washed with 100 mL of DCM. Volatile fractions of DCM were removed on a rotary evaporator. The crude reaction mixture was treated with saturated brine (2x 100 mL) and extracted with diethyl ether (2x 100 mL). The combined ethereal layers were dried over Na₂SO₄ and concentrated on a rotary evaporator to give a dark yellow/light brown liquid. Crude was divided into two equal portions and subjected to column chromatography over silica gel. Silica gel (300 g) was loaded onto column (25 cm height x 5.5 cm width). After eluting 500 mL of solvents, fractions were collected in 40 mL. First off fractions were EPI **10** followed by PETGE **1** (R_{f} = 0.62), then dimer **12** (R_{f} = 0.44), and finally triglycidyl ether **11** (R_{f} = 0.33). Isolated pure PETGE **1** yields were 45-60% (some amount will be contaminated with other side products). Spectral analysis was in agreement with reported data for **1** and analysis on products **11** & **12** were also satisfactory.

The following Scheme 4 illustrates this reaction.

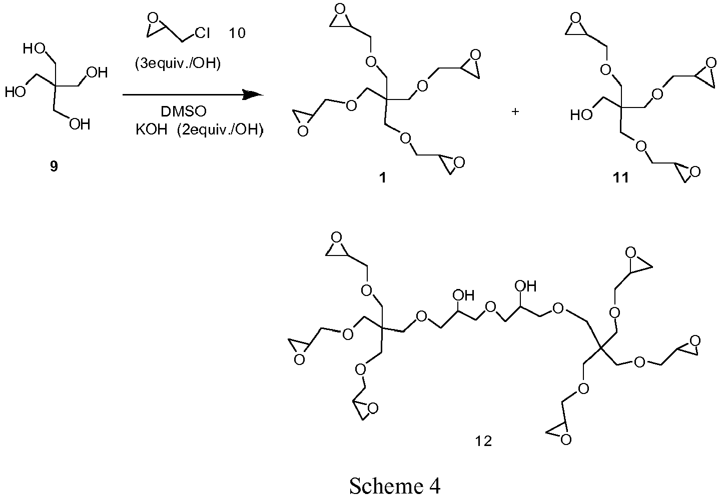

### B. Protecting the Primary Amines of Diethylenetriamine and Using to Secondary Amine to Cap the Tetrafunctional Epoxide: Two Primary Amines

### [(C) = PETGE; (IF1) = OH; (BR1) = DIA; (TF) = Primary NH₂; G=1]

DETA **13** (6.56 g, 63.6 mmol) (Acros) and 125 mL of 4-methyl-2-pentanone **14** (Aldrich) were put into a 250-mL round bottom flask, equipped with a Dean-Stark trap, and heated to 140°C under argon atmosphere. After the theoretical amount of water (2.2 mL) was azeotroped out, the reaction was cooled to RT. The weight of the mixture was 77.37 g, containing 63.6 mmol of secondary amine **15.** The mixture (12.16 g) was transferred to a 50-mL round bottom flask. Solvent was removed by rotary evaporation to give an oil. To this oil was added a solution of PETGE **1** (360 mg, 1.0 mmol) (made by Example 4A) in 5.5 mL of dry MeOH. The reaction was heated to 75°C for 23 h. The solvent was removed to provide **16** and 25 mL of 2-propanol and 3.0 mL of water were added to the residue. The mixture was heated to 50°C for 2 h. The solvent was removed using a rotary evaporator. Excess DETA **13** was removed by Kugelrohr distillation (150°C) to give the product **17** as a slightly yellow sticky oil that has the following spectra:
MALDI-TOF: Calc. 773; found 795.784 (*M*⁺Na) amu.

The following Scheme 5 illustrates this above reaction:

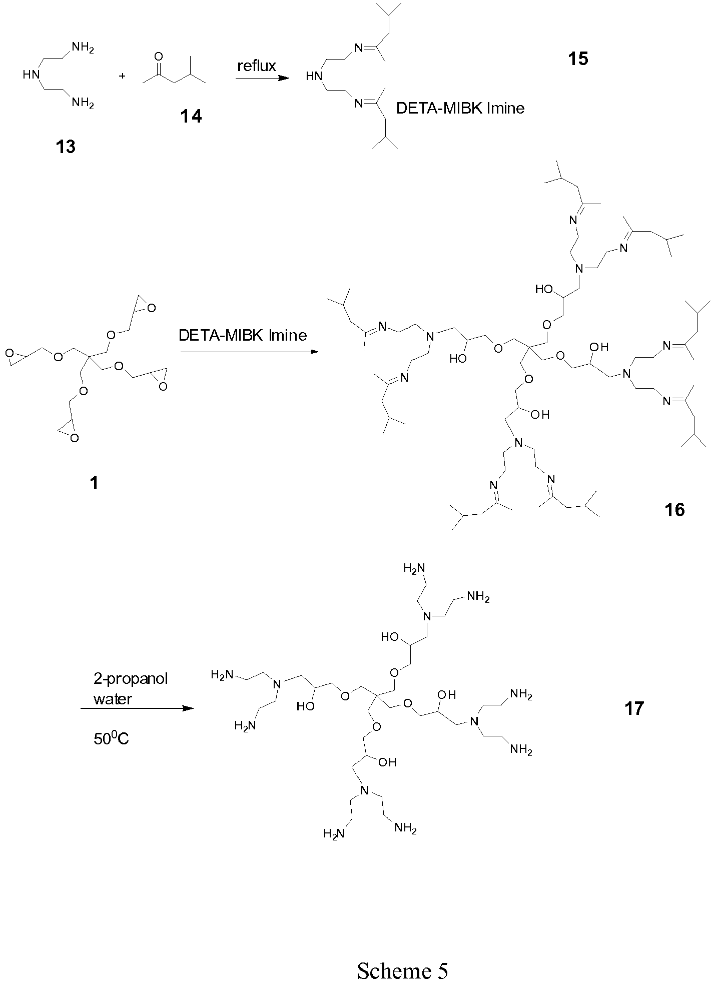

### C. [(C) = PETGE; (IF1) = OH; (BR1) = DETA; (BR2) in situ = Methylacrylate; (TF) = Methyl ester; G=2.5]

A solution of the octa amine **17** (made by Example 4B) in MeOH was added to the solution of methyl acrylate **18** (Acros) in MeOH dropwise at 0°C (1.5 equiv. per NH). After the addition, the reaction was allowed to warm to RT. The mixture was then heated to 40°C for 24 h. Then the solvent was removed to give the product **19** as an yellow oil, having the following spectra:
MALDI-TOF: Calc. 2146; found 2169.662 (*M*⁺Na) amu.

Scheme 6 illustrates this reaction:

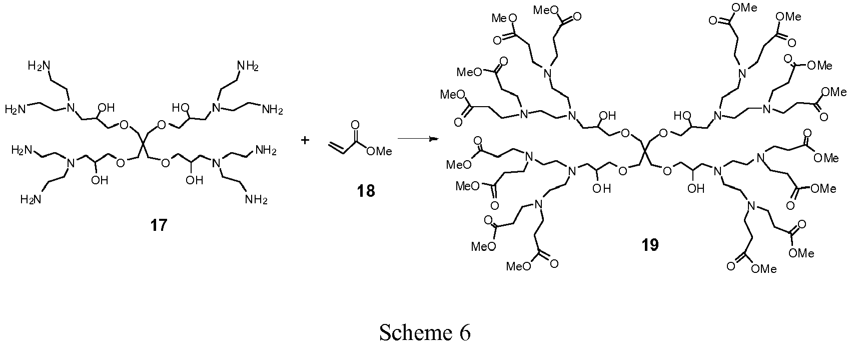

### Example 5 (outside scope of the invention): Ring-Opening Using a Preformed Tris(hydroxymethylamine)(TRIS) Branch Cell Reagent: Nona-Hydroxyl Surface Dendrimer, G=1, from TMPTGE and TRIS

### [(C) =TMPTGE; (FF)=Et; (IF1) = OH; (BR1) = TRIS; (TF) = OH; G=1]

TMPTGE**4** (2.66 g, 8.8 mmol) and 50 mL of MeOH were placed in an oven dried 100-mL round bottom flask. The flask was equipped with a stir bar and stopper. TRIS **20** (4.79 g, 39.6 mmol) (Fisher Scientific) was added to the above stirring reaction mixture in one portion at RT. The flask was arranged with a refluxing condenser and heated at 60°C for 60 h under a N₂ atmosphere. TRIS **20** dissolves completely after heating for about 15 min The reaction mixture was cooled to RT and transferred into a 500-mL Erlenmeyer flask. Then first 120 mL of chloroform was added, followed by slow addition of 300 mL of hexanes under constant stirring using a spatula. Formation of a white precipitate was observed during the hexanes addition. The mixture was mixed thoroughly once again and allowed to stand at RT overnight. The precipitate was observed as solid flakes on the walls and bottom of the flask. The solution was mixed gently to separate the solid from the glass, followed by filtration of the mixture through a Büchner funnel, giving the desired product **21** (1.7 g). On the bottom of the flask a colorless paste remained, even after separating the solid. This paste weighed 5.2 g (¹H and ¹³C NMR showed signals for dendrimer **21** along with trace amounts of TRIS **20**). The paste was dissolved in 5 mL of MeOH, followed by rinsing the flask with MeOH (2x 2 mL). The methanol solution was loaded onto a Sephadex™ LH-20 column. After eluting 600 mL of MeOH, fractions were collected in 15 mL aliquots. The desired dendrimer **21** was found in fractions 18-47; whereas, TRIS **20** was found in fractions 48-58. Fractions 18-47 were combined and the solvent was evaporated on a rotary evaporator under reduced pressure to give a hygroscopic solid (4.2 g; 71.82%), (G=1) PEHAM dendrimer **21.** Evaporation of solvents from 48-58 gave TRIS **20** (0.592 g) as a colorless solid. Its spectra are as follows:
¹H NMR: (300 MHz, CD₃OD): δ 0.86 (t, J=7.20 Hz, 3H), 1.42 (q, J=6.90 Hz, 2H), 2.64 (dd, J=7.80 & 8.10 Hz, 3H), 2.78 (dd, J=3.60 & 3.60 Hz, 3H), 3.34 (s, 6H), 3.35 (s, 6H), 3.41 (d, 5.10 Hz, 6H), 3.48 (s, 1H, OH), 3.50 (s, 1H, OH), 3.53 (d, J=3.00 Hz, 12H), 3.58 (s, 1H, OH), 3.67 (bt, J=3.00 Hz3H, 3 x NH), 3.79 (sextet, J=3.60 Hz, 3H), 4.81 (s, 9H, 9 x OH); and
¹³C NMR: (75 MHz, CD₃OD): δ 6.91, 22.72, 43.41, 44.34, 59.83, 61.49, 70.07, 71.57, 74.27; and
IR (Neat): vₘₐₓ 3354, 2919, 2873, 1460, 1424, 1408, 1367, 1296, 1234, 1106, 1029, 866, 773 cm⁻¹; and
MALDI-TOF MS: C₂₇H₅₉N₃O₁₅ Calc. 665; found 689 (*M*⁺Na) amu.

The following Scheme 7 illustrates this reaction:

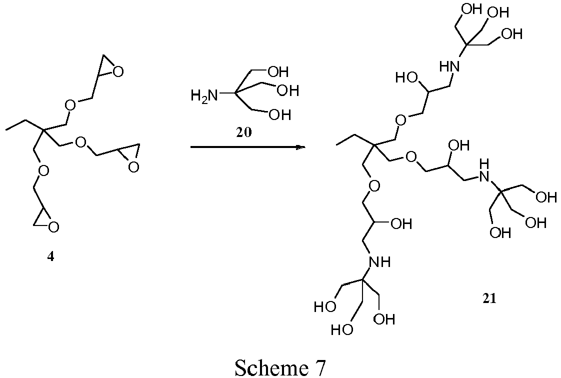

### Example 6 (outside scope of the invention): Reaction of pentaerythritol tetraglycidylether (PETGE) with tris(hydroxymethyl)aminomethane (TRIS)

### [(C) = PETGE; (IF1) = OH; (BR1) = TRIS; (TF) = OH; G=1]

In a 250-mL round bottom flask, PETGE **1** (3.16 g, 8.78 mmol) was dissolved into 70 mL of MeOH under mechanical stirring. The solution was placed into a 60°C oil bath, and TRIS **20** (6.41g, 52.8 mmol, 1.50 equiv./epoxide) (Fisher Scientific) was added via a powder funnel. The flask was then arranged with a reflux condenser and allowed to react for 48 h. The reaction was monitored by TLC (3:1 CH₂Cl₂:MeOH) and no PETGE **1** was observed (R_{f} =0.80) after that time. The mixture was diluted with 120 mL of chloroform, then 300 mL of hexanes were added slowly under stirring. A white precipitate formed and the mixture was allowed to stand for 16 h. The solution was filtered through a Büchner funnel to yield a clear, white paste at the bottom of the flask. The paste was dried under vacuum to yield 6.98 g of crude product **22.** The product was re-dissolved into 40 mL of MeOH and 60 mL of chloroform and remaining TRIS **20** was separated by crystallization from 300 mL of hexanes. The mixture was filtered and the remaining semisolid dried under high vacuum for 24 h to yield 5.35 g product **22** (72.0% yield, 7.43g theoretical mass). For further purification, the material was loaded onto a 36" x 4" (91 cm x 10 cm) LH-20 Sephadex™ column. After the void volume of 575 mL was collected, 48 fractions each of 12 mL of MeOH were collected and analyzed by TLC (7:3 MeOH:NH₄OH). 2.29 g (31% yield) of purified product **22** was recovered. Its spectra are as follows:
¹H NMR (500 MHz, D₂O): δ 2.644 (1H, q, J=4.88Hz), 2.76 (1H, q, J=3.625), 3.34 (2H, s) 3.44 (2H, d, J=9.0Hz), 3.54 (2H, q, J=6.75Hz), 3.79 (1H, s), 4.80 (4H, s); and
¹³C NMR (75 MHz, D₂O): δ 45.43, 46.91, 49.85, 61.01, 62.69, 71.14, 75.43, 79.42; and
MALDI-TOF: C₃₃H₇₂N4O₂₀ Calc. 845; found 867 [M+Na]⁺ amu.

The following Scheme 8 illustrates this reaction.

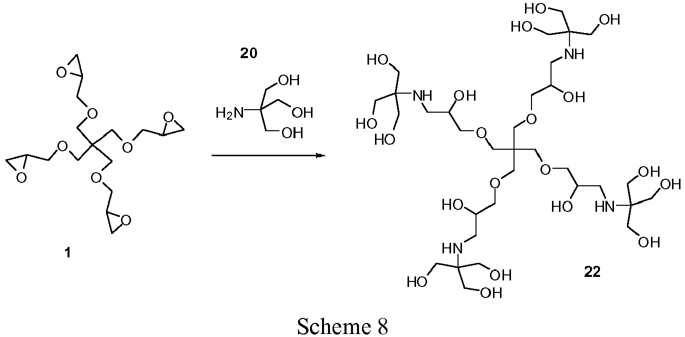

### Example 7 (outside scope of the invention):

### A. Reaction of pentaerythritol triallyl ether (PETriAE) with m-chloroperbenzoic acid (m-CPBA)

### [(C) = PETriGE; (FF) = OH; (TF) = Epoxide]

A 100-mL round bottom flask was charged with PETriAE **23** (2.56 g, 10.0 mmol, 30 olefin mmol) (Aldrich) and 50 mL chloroform (Fisher Scientific). To this solution was added under mechanical stirring *m*-CPBA **24** (8.84 g, 36.0 mmol) (Acros Organics) in portions at RT. The mixture was stirred for 3 days, then first washed with 3% aqueous sodium metabisulfite (Na₂S₂O₅) solution (3x 100 mL) (Aldrich), followed by 3% aqueous sodium hydrogen carbonate (NaHCO₃) solution (3x 100 mL). The organic layer was dried over sodium sulfate, concentrated by rotary evaporation to give pale yellow colored liquid **25** (2.58 g, 84.8% yield). Its spectra are as follows:
¹H NMR (300 MHz, CDCl₃): δ 2.57 (q, J = 2.70 Hz, 3 H), 2.76 (t, J = 4.50 Hz, 4 H), 3.07-3.12 (m, 3 H), 3.33 (dd, J = 1.50 & 1.20 Hz, 2 H), 3.37 (dd, J = 1.50 & 1.20 Hz, 2 H), 3.51 (q, J = 9.00 Hz, 6 H), 3.66 (s, H), 3.69 (d, J = 2.70 Hz, 2 H), 3.73 (d, J = 2.40 Hz, 2 H); and
¹³CNMR (75 MHz, CDCl₃): δ 44.34, 45.51, 50.97, 65.33, 71.61, 71.67, 71.73, 72.18, 72.20, 72.23; and
IR (Neat): 3507, 3056, 2999, 2922, 2870, 1476, 1450, 1424, 1336, 1248, 1160, 1098, 1051, 953, 901, 855, 834, 751 cm⁻¹; and
MALDI-TOF MS: C₁₄H₂₄O₇; Calc. 304.3; found 327.05 [M+Na]⁺amu.

The following Scheme 9 illustrates this reaction.

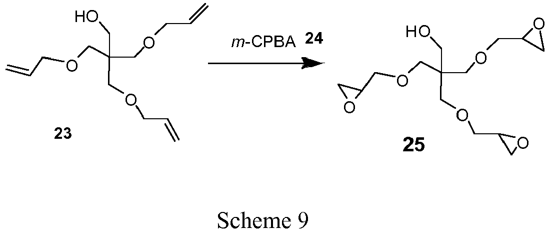

### B. Reaction of pentaerythritol triglycidyl ether (PETriGE) with propargyl bromide

### [(C) = Pentaerythritol triglycidyl ether (PETriGE); (FF) = alkyne; (TF) = Epoxide]

To a 250-mL oven-dried round bottom flask was added PETriGE product **25** (made by Example 7A) and 120 mL dry DMF (Aldrich). The reaction flask was flushed with N₂ gas, closed with a septum and cooled to 0°C with an ice bath. To this solution was added, under mechanical stirring, sodium hydride (1.35 g, 33.8 mmol, 60% dispersion in mineral oil) (Aldrich) in portions over a period of 20 mins. After additional stirring at 0°C for 40 mins, propargyl bromide **26** (3.73 mL, 90% wt% in toluene) was added. Cooling continued for 90 mins, and then the mixture was allowed to gradually warm to RT. The mixture was stirred overnight at this temperature. The reaction mixture was then cooled to 10°C using an ice bath, diluted with 70 mL water, extracted with ethyl acetate (3x 70 mL), and washed with saturated brine solution (2x 50 mL). The combined extracts were dried over sodium sulfate and concentrated by rotary evaporation to give a dark brown colored liquid, which was purified through column chromatography on silica gel, using initially ethyl acetate in hexanes (20:80% v/v), which was gradually changed to ethyl acetate in hexanes (40:60% v/v). Fractions giving a TLC (ethyl acetate: hexanes 1:1) spot at R_{f}= 0.31 were combined and found to be the pure propargylated pentaerythritol triglycidyl ether **27** (3.79 g, 82% yield). Its spectra are as follows:
¹H NMR (300 MHz, CDCl₃): δ 2.43 (t, J = 2.10 Hz, 1 H), 2.61 (q, J = 2.70 Hz, 3 H), 2.79 (t, J = 4.20 Hz, 3 H), 3.13 (sextet, J = 3.00 Hz, 3 H), 3.37 (d, J = 6.00 Hz, 1 H), 3.41 (d, J = 5.70 Hz,1 H), 3.51 (d, J = 3.90 Hz, 6 H), 3.54 (s, 2 H), 3.70 (d, J = 3.00 Hz, 2 H), 3.74 (d, J = 2.70 Hz, 2 H), 4.13 (dd, J = 2.10 & 0.30 Hz, 2 H); and
¹³C NMR (75 MHz, CDCl₃): δ 44.44, 45.69, 51.06, 58.84, 69.05, 70.15, 72.24, 74.34, 80.25; and
IR (Neat): 3267, 3057, 2991, 2924, 2878, 2755, 1480, 1434, 1367, 1337, 1260, 1168, 1096, 1014, 963, 906, 840, 758, 666 cm⁻¹.

The following Scheme 10 illustrates this reaction.

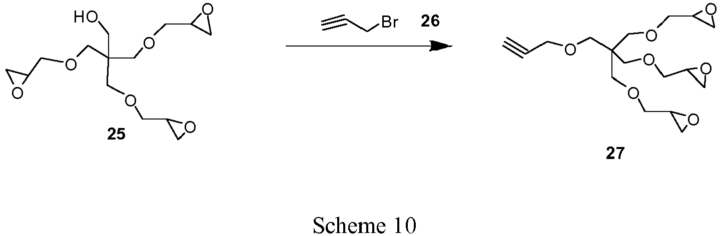

### C: Synthesis of Pentaerythritol Tetraglycidyl Ether from Pentaerythritol Using Allylbromide and m-Chloroperoxy Benzoic Acid (m-CPBA)

### [(C) = PETGE; (TF)=Epoxy]

Pentaerythritol **9** (15.03 g, 110 mmol) (Acros Organics) and 250 mL of THF were mixed in a 1-L round bottom flask. KOH (85.93 g 1.35 mol 3.0 equiv. per OH), and tetrabutyl ammonium bromide (TBAB) (0.460 g, 1.23% mol) (Acros Organics) were added via powder funnel, followed by addition of allyl bromide **28** (106.6 g, 1.35 mol, 3.0 equiv. per OH) via a 125-mL addition funnel over 10 mins. The reaction was then immediately placed into an oil bath at 70°C for 24 hours. The reaction was monitored by TLC (10:1 hexanes:ethyl acetate), showing the product spot at R_{f}= 0.4 and no spots for tri-, di-, or mono-allyl-substituted pentaerythritol. The reaction mixture was vacuum-filtered through a 150-mL coarse glass-fritted Büchner funnel. The organic layer was diluted with diethyl ether (2x 250 mL). The organic layer was washed with 5% K₂CO₃ (5x 300 mL) and dried over MgSO₄. Volatiles were removed by a rotary evaporator (40°C bath temperature) to yield the pentaerythritol tetraallyl ether **29** (PETAE) (30.07 g; 92% yield); and has the following spectra:
IR (Neat): vₘₐₓ 3080, 2867, 1646, 1478, 1422, 1350, 1264, 1137, 992, 922 cm⁻¹; and
¹³C NMR: (75 MHz, CDCL₃): δ 45.33, 69.25, 72.15, 115.95, 135.16; and
¹H NMR: (300 MHz, CDCL₃): δ 3.39 (4H, s), 3.84 (4H, q, J=2.3Hz), 5.04 (2H, q, J=13.8Hz), 5.80 (1H, septuplet, J=7.78Hz).

PETAE **29** (3.29 g, 11.0 mmol) and 50mL of chloroform were added to a 500-mL round bottom flask equipped with a magnetic stir bar. Then *m*-CPBA **24** (70%) (12.51 g, 51.0 mmol, 1.14 equiv. per alkene) (Acros Organics) was added over 10 mins. via an addition funnel. The reaction flask became warm within 30 mins. of the peracid addition. The reaction was stirred for 72 hours at 22°C, then diluted with 100 mL DCM and transferred to a 500-mL separatory funnel. The organic layer was washed with 3% Na₂S₂O₅ (3x150 mL) and 3% NaHCO₃ (3x150 mL). The organic layer was dried with Na₂SO₄, filtered and volatile materials were removed by a rotary evaporator (40°C bath temperature). TLC (7:3 toluene:acetone) on silica showed one spot at R_{f}= 0.48. Further drying of the product overnight at high vacuum yielded PETGE **1** as a clear colorless viscous liquid (3.86 g; 92% yield); and has the following spectra:
IR (Neat): vₘₐₓ 3055, 2997, 2876, 1724, 1480, 1340, 1258, 1163, 1018, 908, 845, 799, 760 cm⁻¹; and
¹³C NMR (75 MHz, CDCl₃): δ 43.96, 45.54 50.62, 69.80, 71.90; and
¹H NMR: (300 MHz, CDCl₃): δ 2.55 (1H, q, J=2.05Hz), 2.72 (1H, t, J=2.33Hz), 3.09 (1H, q, J=3.06Hz) 3.32 (1H, q, J=4.43Hz), 3.45 (2H, d, J=1.65Hz), 3.64 (1H, q, J=3.675Hz); and
MALDI-TOF: 383 [M+Na]⁺ amu.

These reactions are represented in Scheme 11.

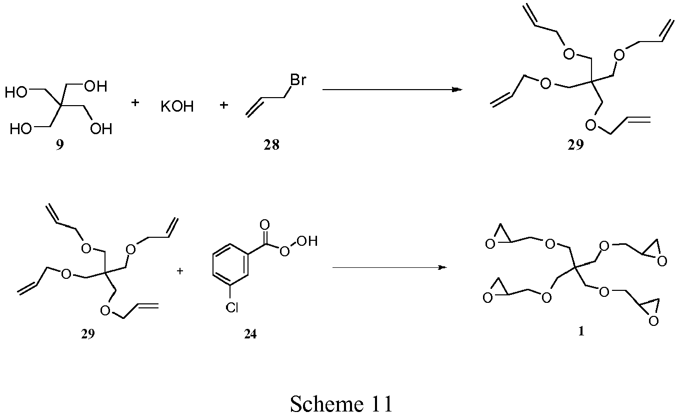

### D. Reaction of PETGE with sodium azide; Modified Core

### [(C) = Pentaerythritol tetraazide (PETAZ); (IF)=OH; (TF) = Azide]

A 50-mL round bottom flask was charged with PETGE **1** (3.6 g, 10 mmol) (made by Example 7C), 27 mL DMF and 3 mL water. To this solution was added sodium azide (7.8 g, 120 mmol, 3 equiv. per epoxide), followed by ammonium chloride (6.36 g, 3 equiv.). The reaction flask was equipped with a stir bar and refluxing condenser and heated at 50°C overnight. Progress of the reaction was monitored by TLC. After this time, the reaction mixture was allowed to cool to RT, then solid materials were filtered off through a Büchner funnel, and the solids were washed with ethyl acetate (1x 50 mL). The filtrate was diluted with 70 mL water and extracted with ethyl acetate (3x 50 mL). The combined organic layers were washed with saturated brine, dried over sodium sulfate and filtered through a silica gel bed. The filtrate was concentrated by rotary evaporation to give colorless liquid **30** (5.1 g, 95% yield). Its spectra are as follows.
¹H NMR (300 MHz, CDCl₃): δ 3.04 (bs, 4H, OH), 3.33 (t, J = 5.70 Hz, 8H), 3.47 (s, 8H), 3.49 (t, J = 2.40 Hz, 8H), 3.93 (pentate, J = 5.10 Hz, 4H); and
¹³C NMR (75 MHz, CDCl₃): δ 45.75, 53.52, 69.68, 71.09, 73.12; and MALDI-TOF MS: C₁₇H₃₂N₁₂O₈; Calc. 532.5, found 555.3 [M+Na]⁺ amu.

The following Scheme 12 illustrates this reaction.

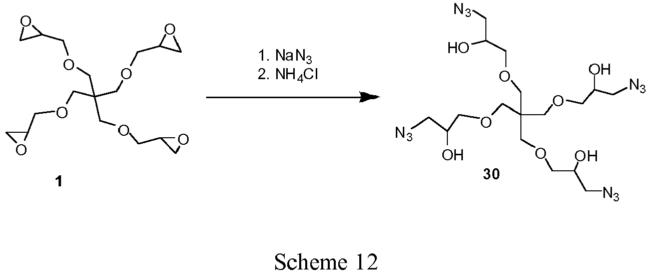

### E. Reaction of propargyl pentaerythritol triglycidyl ether with pentaerythritol tetraazide (PETAZ) to produce PEHAM dendrimer G=1 with a four-arm core and epoxide surface

### [(C) = PETGE; (IF1) = OH; (EX1) = Triazole; (BR1) = PETriGE; (TF) = Epoxide; G=1]

To an oven-dried 50-mL round bottom flask was added propargyl pentaerythritol triglycidyl ether **27** (0.39 g, 1.14 mmol, 1.05 equiv. per N₃; made from Example 7B), pentaerythritol tetraazide **30** (0.144g, 0.271 mmol; made from Example 7D), 1.2 g *of t-*butanol and 1.2 g of water. The flask was equipped with a stir bar and sealed with a stopper. To this mixture was added sodium ascorbate (0.026 g, 0.114 mmol, 0.10 equiv.), followed by copper(II)sulfate pentahydrate (CuSO₄.5H₂O) (0.014 g, 0.057 mmol, 0.05 equiv.). The progress of the reaction was monitored by TLC. After stirring for 3 days at RT, the reaction was found to be completed. Product **31** was used for the next reaction in Example 7F without isolation because of the high reactivity of the epoxide groups.

The following Scheme 13 illustrates this reaction.

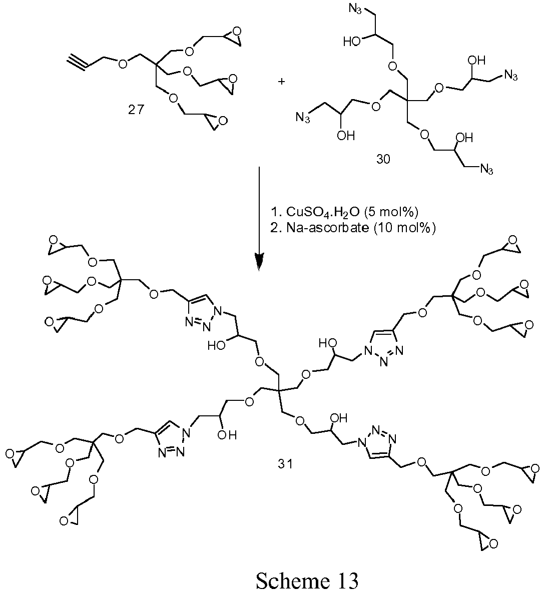

### F. Reaction of the product from Example 7E with diethanolamine (DEA) to produce PEHAM dendrimer G=2 with a four-arm core and hydroxyl surface

### [(C) = PETGE; (IF1) = OH; (EX1) = Triazole; (BR1) = PETriGE; (IF2) = OH; (BR2) = DEA; (TF) = OH; G=2]

Crude product **31** was quenched with DEA **5** (1.07 g, 10.26 mmol, 3 equiv. per epoxide) (Aldrich) in 3 mL of *t*-butanol. The reaction mixture was stirred at RT for 1 day, then heated at 45°C for 3 days. After cooling to RT, the reaction mixture was diluted with 300 mL of MeOH, and a few undissolved inorganic solids were filtered off. The filtrate was further purified by UF through a 1K size exclusion membrane. After collecting 900 mL of permeate, the retentate was withdrawn from the UF and the UF washed with MeOH (3x 50 mL). The solvent was removed by rotary evaporation to give a tan colored liquid, which was dried under high vacuum to give the desired G=2 dendrimer **32** as a foam-like solid (850 mg, 99% yield). Its spectra are as follows:
¹H NMR (300 MHz, CD₃OD): δ 2.49-2.80 (m, H), 3.40-3.50 (m, H), 3.52-3.70 (m, H), 3.81 (bs, H), 4.10-4.20 (m, H), 4.38-4.50 (m, H), 4.588 (bs, H), 7.99 (s, 4H); and
¹³C NMR (75 MHz, CD₃OD): δ 29.99, 45.51, 45.68, 53.39, 57.47, 58.46, 59.63, 64.32, 68.44, 69.03, 69.35, 70.12, 72.85, 73.84, 125.04, 144.82.

The following Scheme 14 illustrates this reaction.

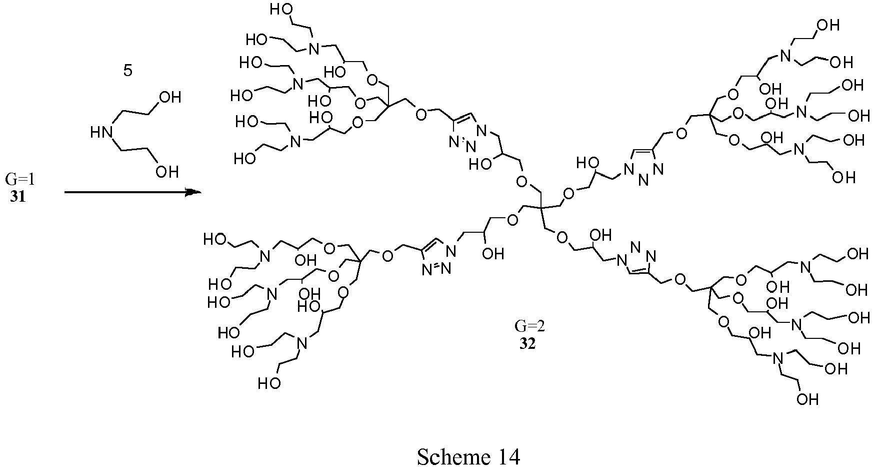

### Example 8 (outside scope of the invention):

### A. Ring-Opening Using an Diester amino Branch Cell Reagent Precursor: Ester Terminated PEHAM Dendrimer, G=1, from Trimethylolpropane Triglycidyl Ether (TMPTGE) and Diethyl iminodiacetate (DEIDA)

### [(C) = TMPTGE; (FF)=Et; (IF1) = OH; (BR1) = DEIDA; (TF) = Ethyl ester; G=1.5]

DEIDA **7** (14.07 g, 74.47mmol) (Aldrich) and 120 mL of dry MeOH were placed in an oven dried 250-mL single necked round bottom flask. The flask was equipped with a stir bar and septum. TMPTGE **4** (5.0 g, 16.55 mmol) (Aldrich) was dissolved in 40 mL of dry MeOH and then added to the above stirring solution through a pressure equalizing funnel dropwise over a period of 1 h at RT. The funnel was replaced with refluxing condenser and the flask heated at 60°C for 60 h under a N₂ atmosphere. The solvent was removed on a rotary evaporator under reduced pressure, which gave a colorless transparent liquid. The entire reaction mixture was transferred into a 100-mL single necked round bottom flask. Excess of DEIDA **7** was removed by Kugelrohr distillation under reduced pressure at 150-160°C. Undistilled product **33** (12.59 g; 87.5% yield) was recovered as a pale yellow color, viscous liquid. Compound **33** is stored in ethyl alcohol at 0°C. Its spectra are as follows:
¹H NMR: (300 MHz, CD₃OD): δ 4.65 (sextet, J=4.20 Hz, 3H), 4.16 (m, 12H), 3.59 (s, 12H), 3.36 (s, 6H), 3.30 (s, 6H), 3.05 (dd, J=3.60 Hz, 3H), 2.95 (dd, J=3.90 Hz, 2H), 2.81 (dt, J=1.80 Hz & 9.90 Hz, 3H), 2.67 (dd, J=8.40 & 8.10 Hz, 2H), 1.37 (q, J=7.50 Hz, 2H), 1.26 (t, J=7.20 Hz, 6H, 2 x CH₃), 1.25 (J=7.20 Hz, 12H, 6 x CH₃), 0.85 (t, J=7.50 Hz, 3H, CH₃); and
¹³C NMR: (75 MHz, CD₃OD): δ 6.81, 13.36, 13.40, 22.66, 43.48, 49.85, 53.62, 55.76, 56.21, 58.00, 60.55, 60.68, 68.72, 71.17, 71.33, 71.50, 73.40, 78.43, 78.48, 168.67, 170.25, 172.31; and
IR (Neat): λₘₐₓ 2980, 2934, 2904, 2868, 1741, 1460, 1408, 1378, 1342, 1250, 1198, 1111, 1065, 1024, 983, 927, 860, 784 cm⁻¹; and
MALDI-TOF MS: C₃₉H₇₁N₃O₁₈ Calc. 869; found 893 (*M*⁺Na) and 847, 801, 779, 775 amu. (The mass spectrum shows a typical fragmentation pattern for elimination of OC₂H₅ group.)

The following Scheme 15 illustrates this reaction:

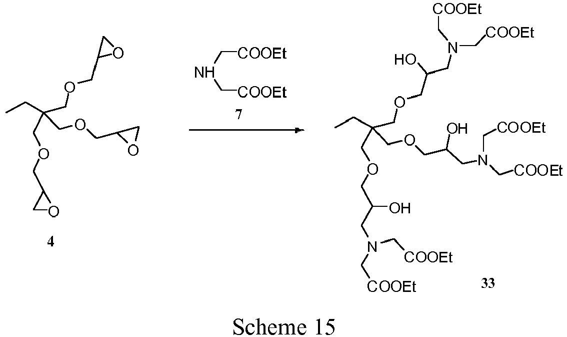

### B. Reaction of the product from trimethylolpropane triglycidylether reacting with diethyliminodiacetate (DEIDA) with tris(2-aminoethyl)amine (TREN) to produce PEHAM dendrimer G=2 with a three-arm core and primary amine surface

### [(C) = TMPTGE; (FF)=Et; (IF1) = OH; (BR1) = DEIDA; (BR2) = TREN; (TF) = Primary NH₂; G=2]

A 100-mL round bottom flask was charged with TREN **2** (17.05 g, 116.82 mmol, 60 NH₂ equiv. per ester) and 40 mL of MeOH (Fisher Scientific) and a magnetic stir bar. After the exothermic mixing reaction had stopped, (20 min), a solution of G=1 ester **33** (0.846g, 0.97 mmol, 5.84 ester mmol; made from Example 8A) in 10 mL of MeOH was added dropwise over a period of 1 h at RT. The mixture was then placed in an oil-bath and heated at 50°C for 3 days. Progress of the reaction was monitored by IR spectroscopy, *i.e.,* the disappearance of the ester vibration at 1740 cm⁻¹ and the appearance of the amide vibration at 1567 cm⁻¹. MALDI-TOF MS analysis indicated the mass for the desired G=2.0 product **34** accompanied by looped compounds at 1348 [M+Na]⁺ and 1201 [M+Na]⁺ (one and two loops). The reaction mixture was diluted with 700 mL of MeOH and subjected to UF using a 1K size exclusion membrane. After collecting 1.8 liters of permeate, the retentate was withdrawn from the UF and the solvent removed by rotary evaporation, giving a pale yellow colored, viscous liquid, which was further dried under high vacuum to give the desired G=2 dendrimer **34** (1.41 g, 98.94% yield). Its spectra are as follows:
¹H NMR (300 MHz, CD₃OD): δ 0.86 (3 H, bt), 1.38 (2 H, bs), 2.32-2.60 (H, m), 2.67-2.76 (H, m), 3.29-3.34 (H, m), 3.82 (3H, bs); and
¹³C NMR (125 MHz, CD₃OD): δ 8.14, 24.06, 38.57, 38.63, 39.98, 40.16, 44.59, 54.00, 55.09, 55.28, 57.21, 58.02, 60.19, 63.05, 63.28, 69.38, 69.94, 72.52, 72.96, 75.00, 173.76, 173.86, 174.03; and
IR (Neat): νₘₐₓ 3298, 2934, 2842, 1659, 1572, 1536, 1470, 1388, 1357, 1311, 1116, 973, 819 cm⁻¹; and
MALDI-TOF MS: C₆₃H₁₄₃N₂₇O₁₂ Calc. 1470.9843.; found 1494.2270 [M+Na]⁺, 1348.022 [M+Na]⁺ (one looped), 1201.0970 [M+Na]⁺ (two looped) amu.

The following Scheme 16 illustrates this reaction.

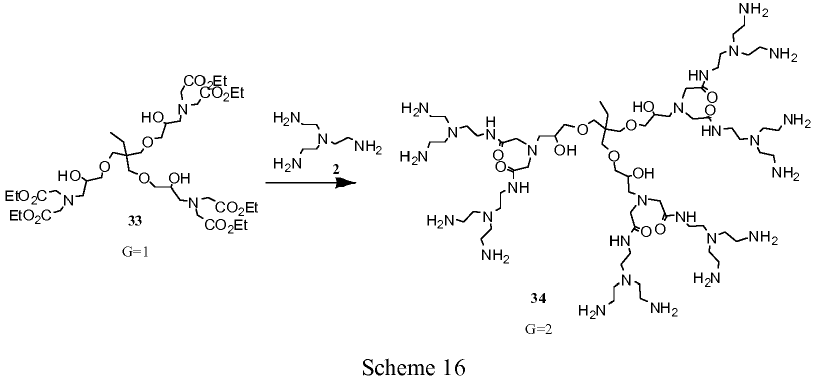

### Example 9 (outside scope of the invention): Reaction of the product from pentaerythritol tetraglycidylether reacting with diethyliminodiacetate (DEIDA) with tris(2-aminoethyl)amine (TREN) to produce PEHAM dendrimer G=2 with a four-arm core and primary amine surface for DNA compaction and antibacterial activity

### [(C) = PETGE; (IF1) = OH; (BR1) = DEIDA; (BR2) = TREN; (TF) = Primary NH₂; G=2]

A 250-mL round bottom flask was charged with TREN **2** (52.26 g, 358.0 mmol, 120 NH₂ equiv. per ester), 50 mL of MeOH (Fisher Scientific) and a stir bar. After the exothermic mixing reaction had stopped (30 min), a solution of G=1 ester **8** (1.25 g, 1.12 mmol, 8.95 ester mmol; made from Example 3) in 10 mL of MeOH was added dropwise over a period of 1 h at RT, and the mixture stirred for overnight. MALDI-TOF MS analysis showed the expected mass peak for the desired product as well as mass peaks for byproducts with one and two loops. An IR spectrum was recorded and showed the presence of the amide vibration at 1575 cm⁻¹ and the absence of the ester vibration at 1740 cm⁻¹. Stirring was continued for additional 36 h. Then the reaction mixture was diluted to 5% w/w solution in MeOH and subjected to UF using a 1K size exclusion membrane. After collecting 3.5 liters of permeate, the retentate was withdrawn from the UF, the solvent was removed by rotary evaporation, and the remaining product dried under high vacuum to give a pale yellow colored, foamy solid **35** (2.02 g, 94% yield). Its spectra are as follows:
¹H NMR (500 MHz, CD₃OD): δ 2.49-2.59 (H, m), 2.62 (H, bt), 2.66 (H, s), 2.68 (H, s), 2.69 (H, s), 2.70 (H, s), 2.73-2.82 (H, m), 3.29-3.47 (H, m), 3.82 (H, bs); and
¹³C NMR (125 MHz, CD₃OD): δ 38.64, 40.19, 48.48, 49.85, 53.94, 55.10, 55.29, 57.66, 58.10, 60.23, 63.06, 69.33, 71.41, 75.11, 173.70, 173.80, 173.97; and
IR (Neat): vₘₐₓ 3313, 3078, 2934, 2868, 1649, 1557, 1541, 1475, 1449, 1362, 1306, 1163, 1101, 978, 818 cm⁻¹; and
MALDI-TOF MS: C₈₁H₁₈₄N₃₆O₁₆; Calc. 1918.6, found 1941.8 [M+Na]⁺ amu.

The following Scheme 17 illustrates this reaction.

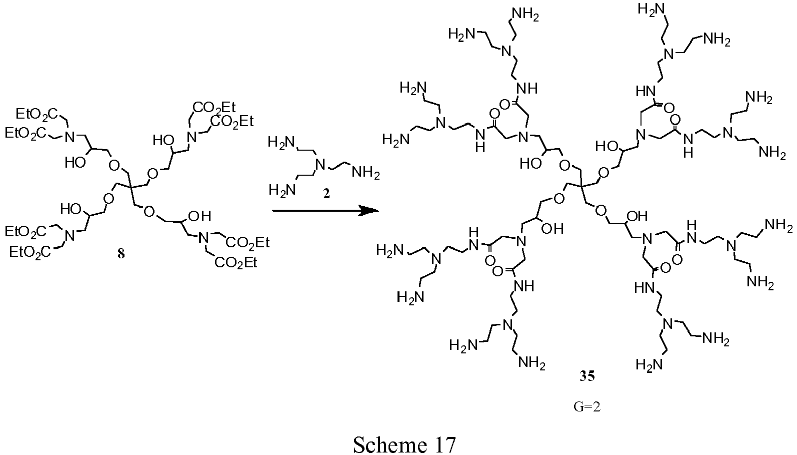

### Example 10 (outside scope of the invention): Reaction of the product from trimethylolpropane glycidyl ether (TMPTGE) with iminodiacetic acid disodium salt (IDADS)

### [(C) = TMPTGE; (FF) = Et; (IF1) = OH; (BR1) = IDA; (TF) = CO₂Na; G=1]

Into a 1000mL, glass, round bottom flask 39g of NaOH (pellets) was dissolved in 100 mL of H₂O. To the stirring solution was added IDADS **36** (91.5 g, 0.69 mol,) was added and stirred vigorously until complete dissolution. A solution of TMPTGE **4** (65.77, 0.22 mol) in 100 mL of MeOH was added to the mixture slowly over a period of 20 mins. and rinsed with a further 100 mL of MeOH. The reaction was left to stir for 24 h at 80°C. The reaction is then dried using 40-100mm Hg at 60° C until the product becomes a solid and further dried to a constant weight using a high vacuum apparatus to yield a white solid **37** (160 g, 88% yield). Its spectra are as follows:
¹H NMR (300 MHz, D₂O): δ 0.8 (m, 3H), 1.31 (m, 2H), 3.25-4.1 (br, 30H), 4.2 (m, 3H).

The following Scheme 18 illustrates this reaction.

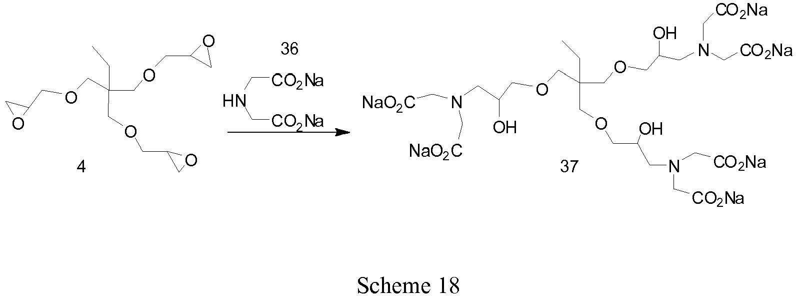

### Example 11 (outside scope of the invention): Reaction of the product from trimethylolpropane glycidyl ether (TMPTGE) with iminodiacetic acid (IDA)

### [(C) = TMPTGE; (FF) = Et; (IF1) = OH; (BR1) = IDA; (TF) = CO₂H; G=1]

To a 100 mL solution of MeOH was added IDA **36** (91.5 g, 0.69 mol,) was added and stirred vigorously until complete dissolution. A solution of TMPTGE **4** (65.77, 0.22 mol) in 100 mL of MeOH was added to the mixture slowly over a period of 20 mins. and rinsed with a further 100 mL of MeOH. The reaction was left to stir for 24 h at 80°C. The reaction is then dried using 40-100mm Hg at 60°C until the product becomes a solid and further dried to a constant weight using a high vacuum apparatus to yield a white solid **38** (160 g, 88% yield). Its spectra are as follows:
¹H NMR (300 MHz, D₂O): δ 0.8 (m, 3H), 1.31 (m, 2H), 3.25-4.1 (br, 30H), 4.2 (m, 3H),

The following Scheme 19 illustrates this reaction.

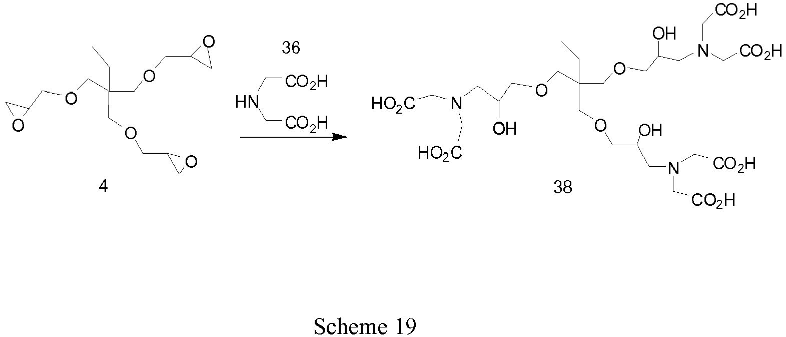

### Example 12 (outside scope of the invention): Ion-Exchange of the sodium salt product 3 from Example 10 to the tetrabutylammonium salt

### [(C) = TMPTGE; (FF) = Et; (IF1) = OH; (BR1) = IDA; (TF) = CO₂NBu₄; G=1]

Compound **37** (from Example 10) (2 g, 2.4 mmol) was dissolved in 5 mL of water and passed through an ion-exchange resin (IRC-50) as the H form. The resulting process was repeated four times (2 g of material through an ion-exchange; total mass of 8 g) gave the product **39** with pH of 3. The combined fractions were freeze dried to give a white solid **39** (6.39 g, 84% yield). 2 g of compound **39** were dissolved in water (40 mL) and titrated to pH 8 using approximately 5 mL of the 0.86M tetrabutyl ammonium hydroxide. The titration process was repeated once again with 3.75 g of compound **40.** The solutions were combined and freeze dried to yield a white solid **40** (7.95 g). Its spectra are as follows:
¹H NMR (300 MHz, D₂O): δ 0.7-0.95 (m, 27H), 1.31 (m, 18H), 1.6 (m, 16H), 3.1-3.85 (br, 46H), 4.13 (m, 3H)

The following Scheme 20 illustrates this reaction.

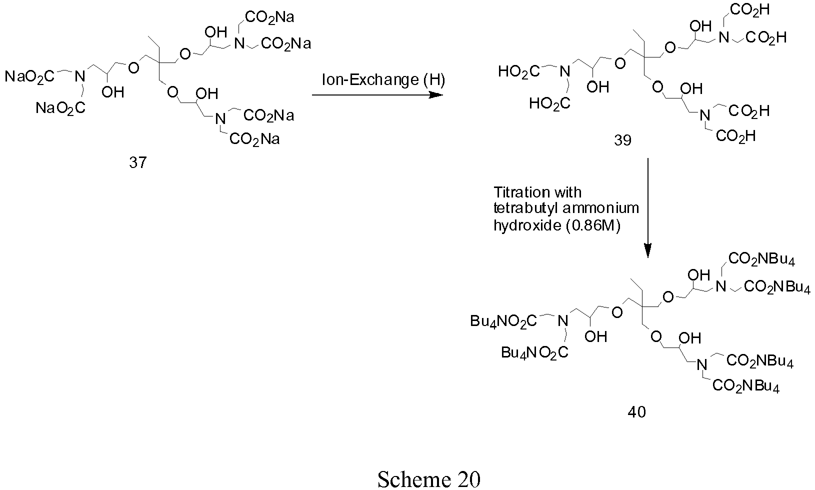

### Example 13 (outside scope of the invention): Reaction of the product from trimethylolpropane glycidyl ether (TMPTGE) with dibenzylamine (DBA)

### [(C) = TMPTGE; (FF) = Et; (IF1) = OH; (BR1) = DBA; (TF) = Benzyl; G=1]

To a 10 mL solution of MeOH was added dibenzylamine **41** (1.18 g, 6.0 mmol) and stirred. A solution of TMPTGE **4** (500mg, 1.66 mmol) in 10 mL of MeOH was added to the mixture slowly and left to stir for 24 h at 45°C. The reaction was monitored by LCMS which indicated the reaction had gone to completion. A sample from the reaction mixture was purified by HPLC on a C18 XTerra column, 0.1%TFA with 5-60% ACN gradient. The reaction solvent was removed under reduced pressure and the remaining material **42** was left in its crude form (1.53g). Its spectra are as follows:
¹H NMR (300 MHz, MeOD): δ 0.65 (t, 3H), 1.05 (q, 2H), 2.98 (br s, 6H), 3.05-3.3 (br, 12H), 4.09 (m, 3H), 4.47 (m, 12H), 7.5 (ArH, 30H), and LCMS (hydrophilic): Rf (min) 9.8, (ESI +ve) found 894.31 [M+H]⁺ calc for C₅₇H₇₂N₃O₆.

The following Scheme 21 illustrates this reaction.

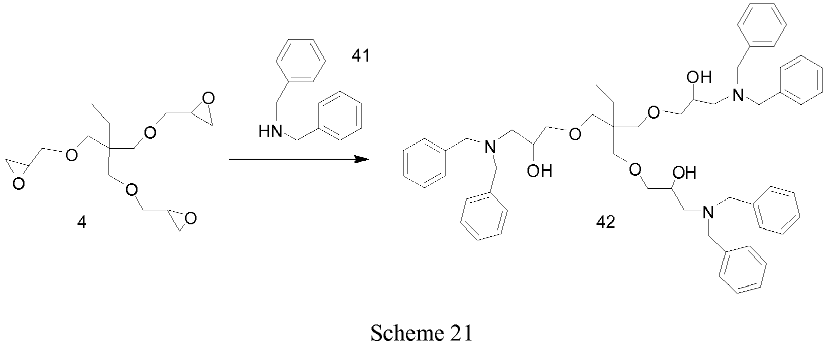

### Example 14 (outside scope of the invention): Protecting the Primary Amines of Diethylenetriamine and Using the Secondary Amine to Cap the Trifunctional Epoxide

### [(C) = TMPTGE; (IF1) = OH; (BR1) = DETA; (TF) = Primary NH₂; G=1]

DETA **13** (260.75 g, 2.5 mol) and MIBK **43** (1110g, 11.1 mol) were put into a 2 L round bottom flask, equipped with a Barrett trap and water-cooled reflux condenser and heated to 110°C under N₂ atmosphere. As the water was azeotroped out, the reaction temperature was increased to 110°C and distillation was continued until no more water was collecting at the bottom of the Barrett trap. The reaction mixture was cooled to RT under N₂. The last traces of MIBK **43** were removed by rotary evaporation to the desired compound **44** as a clear, orange liquid which was continued through to the next step.

The imine protected DETA **44** (806 g, 3 mol) was mixed with isopropanol (100 mL) and left to stir, finally warmed to 60-70°C under N₂. TMPTGE **4** (302, 1 mol) dissolved in isopropanol (200 mL) and added slowly (1.5-2 hours) to the warm DETA-MIBK **44** solution to provide **45.** The flask was rinsed with isopropanol (50 mL) and added to the reaction mixture. The reaction mixture was left to stir at 80°C for 48 h. DI water (300 mL) was added and left to stir for another 16 h at 80°C. The reaction temperature was increased to 110°C and the water was azeotroped out. This step was reaped twice with 600 mL of DI water. The reaction mixture was cooled to RT and 700 mL of water was added. The solution was extracted with hexane (3 x 300 mL), which were then discarded. The aqueous solution was filtered through a coarse filter and the solvent removed under reduced pressure. The material was then subjected to a Kugelrohr distillation (205°C and 5 mm Hg) to yield the product **46** as a viscous, clear, orange, semi solid (498 g, 81.6%). Its spectra are as follows:
¹H NMR (300 MHz, MeOD): δ0.86 (m, 3H), 1.14 (m, 2H), 2.4-2.9 (br, 20H), 3.2-3.75 (br, 16H), 3.85 (br s, 3H). ESI +ve found 612.16 [M+H]⁺ calc for C₂₇H₆₆N₉O₆.

The following Scheme 22 illustrates this reaction.

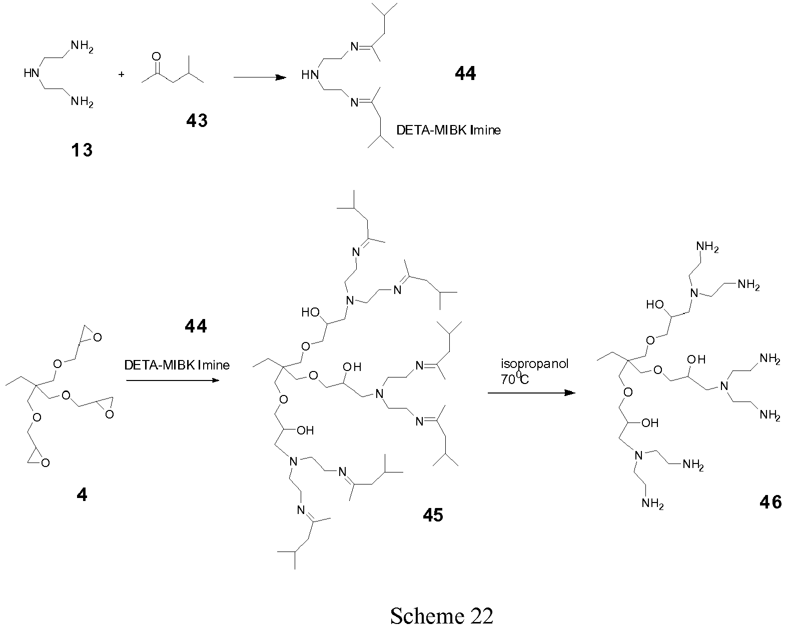

### Example 15 (outside scope of the invention): Formulation of a PEHAM dendrimer of Formula (I) with an agriculturally active entity where the solubility of the active entity is increased

To a 10% w/w solution of agrochemical active dissolved in a suitable volatile organic solvent, (*e.g.,* MeOH. DCM, EtOH, acetone or other appropriate solvent) was added a 10% w/w solution of dendrimer in either water or the same organic solvent as above. The mixture was left to stir for 2-4 h after which time the volatile organic solvent was then removed under reduced pressure to provide a 1:1 mixture of the active and dendrimer. This oily solution was then dissolved in water and filtered. Analysis of active content in the aqueous solution by HPLC or GLC assay provided an estimate of the solubility increase due to the addition of the dendrimer.

Using the general method above for trifluralin (an agrochemical known to have extremely poor aqueous solubility), it was demonstrated that two different dendrimers showed a significant increase in its aqueous solubility.

| **Active** | **Solubility assessment by GLC assay** | **Increase** | **Sample Appearance** |
|---|---|---|---|
| Trifluralin | 0.22 mg/L at pH 7 | Control none | - |
| Trifluralin + Example 2 G1 TMPTGE, OH | 0.35 g/L at pH 7 | 1,000 fold | Light yellow slightly turbid |
| Trifluralin+ Example 14 G1 TMPTGE, NH2 | 5.43 g/L at pH 7 | 25,000 fold | Clear yellow solution |

### Example 16: Formulation of a PEHAM dendrimer of Formula (I) with an agriculturally active entity where the solubility of the active entity is increased

To a 10% w/w solution of agrochemical active dissolved in suitable volatile water miscible organic solvent, *e.g.* MeOH, EtOH, acetonitrile or acetone is added a 10% w/w solution of a PEHAM dendrimer in water. The mixture is left to stir for 2-4 h. Then the level of aqueous solution is adjusted to ensure the volatile organic component is less than 10% of the total volume. The sample is frozen in a dry ice acetone bath and the solvent removed by lyophilization to yield an amorphous solid. The amorphous solid is dissolved in water and filtered to yield the stock solution. Analysis of active content in the aqueous solution by HPLC or GLC assay provides an estimate of the solubility increase due to the addition of the dendrimer. The PEHAM dendrimer of Examples 2 and 14 were tested and obtained results similar to those of Example 15.

### Example 17: Improvement in leaf penetration and efficacy of agriculturally active glyphosate in the presence of PEHAM dendrimers

### Sample preparation:

A matrix of 5 mL standard solutions was prepared using either one of two commercial products - GrowChoice® (based on the glyphosate IPA-salt) and Touchdown® (based on the potassium salt), each at a typical field-use rate of 10 mL/L or 5 mL/L (1% or 0.5%), as well as a total of five PEHAM dendrimers, each prepared to give a final concentration of 0.05% or 0.1% (these are typical concentrations for adjuvants that might be included in the tank-mix). Two control solutions of the same rate of GrowChoice® and Touchdown®, without any dendrimer solution, were also prepared.

**Table 1**

| | **Sample Number (percent of dendrimer in final solution)** | | | | |
|---|---|---|---|---|---|
| **Active (percentage, volume)** | **#1 G1-OH Example 2** | **#2 G1-NH₂ Example 14** | **#3 G1-CO₂ Na Example 10** | **#4 G1-CO₂ NBu₄ Example 12** | **#5 G2-OH Example 7** |
| GrowChoice A (1%, 0.05 ml). | **1A** (0.05%) | **2A** (0.05%) | **3A** (0.05%) | **4A** (0.05%) | **5A** (0.05%) |
| GrowChoice B (1%, 0.05 ml). | **1B** (0.1%). | **2B** (0.1%). | **3B** (0.1%). | **4B** (0.1%). | **5B** (0.1%). |
| Touchdown C (1%, 0.05 ml). | **1C** (0.05%) | **2C** (0.05%) | **3C** (0.05%) | **4C** (0.05%) | **5C** (0.05%) |
| Touchdown D (1%, 0.05 ml). | **1D** (0.1%). | **2D** (0.1%). | **3D** (0.1%). | **4D** (0.1%). | **5D** (0.1%). |
| GrowChoice E (0.5%, 0.025 ml) | **1E,.** (0.05%) | **2E** (0.05%) | **3E** (0.05%) | **4E** (0.05%) | **5E** (0.05%) |
| Touchdown F (0.5%, 0.025 ml) | **1F** (0.05%) | **2F** (0.05%) | **3F** (0.05%) | **4F** (0.05%) | **5F** (0.05%) |
| GrowChoice A (1%, 0.05 ml). | GC control | | | | |
| Touchdown C (1%, 0.05 ml). | TD control | | | | |

### Biological Assessment: Using thistle plants in a green house

A single 5 µl droplet of each prepared formulation above was applied by micro-syringe onto the adaxial (upper) surface of the third leaf, to the side of the midrib. Assessments of the plants' health were made at 5 days. The trial is on-going for assessment at 14 and 21 day intervals. Table 2 below shows the plants after 5 days (2 = Touchdown control, 11 = solution 4C).

**Table 2**

| Treatment | Solution | Present leaf stage | Nominal plant diameter.cm | % damage |
|---|---|---|---|---|
| 1 | GrowChoice control | 9 | 22 | 5 |
| 2 | Touchdown control | 8 | 22 | 5 |
| 3 | 1A | 9 | 24 | 10 |
| 4 | 2A | 9 | 26 | 5 |
| 5 | 3A | 9 | 27 | 0 |
| 6 | 4A | 8 | 25 | 0 |
| 7 | 5A | 8 | 27 | 5 |
| 8 | 1C | 9 | 23 | 0 |
| 9 | 2C | 8 | 21 | 5 |
| 10 | 3C | 9 | 24 | 5 |
| 11 | 4C | 8 | 28 | 10 |
| 12 | 5C | 9 | 27 | 5 |

Preliminary indications at 5 days from these results are that solutions 1A and 4C show marginally greater "brown-out" of the centre than the other solutions (scored at 10% vs. 5% for the controls). While not wishing to be bound by theory, it is believed that with the present dendrimer formulation a higher percentage of damage occurs (*i.e.* the dendrimer is making the active more efficacious) probably by helping draw more of the active into the plant, killing the plant faster or higher activity for lower dose.

### Summary of observed results:

1. It was virtually impossible to identify the original application site for the two control solutions.
2. There was evidence of necrotic damage at the application site for solutions 5, 6, 7 and 10, 11, 12.
3. The % damage scores above are primarily an assessment of the extent of "brown-out" on the emerging new growth.
4. Treatment groups 3 and 11 which incorporate PEHAM dendrimer show significantly higher percent damage, which is a clear indication that the dendrimer-glyphosate solutions penetrate the leaf surface and provide greater efficacy.

### Example 18: Determination of improved leaf penetration of agrochemicals in the presence of PEHAM dendrimers

Using the same formulation procedure outline in Example 14 above, a series of 1:1 mixtures of agrochemicals and PEHAM dendrimers were prepared using ¹⁴C radiolabeled solutions of agrochemicals [^{I4}C-labelled atrazine 1 mCi/mmol, and glyphosate-mono(isopropyl ammonium) salt 10-30 mCi/mmol]. The oily mixtures were diluted with water to a level of 1% active for application to plants. Control solutions using the same level of agrochemical but no dendrimer were also prepared. Using a microsprayer, uniform droplets of ¹⁴C-labelled herbicide were applied to a circular area (10 mm diameter) adjacent to the mid-rib of the abaxial surface of the fourth leaf of 21-day-old plants of pea plants. Each treatment group was replicated four times. Samples were left for a set uptake period (1 - 48 h), then the leaves were removed and the abaxial surface washed successively with MeOH + water (1 mL; 1 + 1 by volume) followed by MeOH (1 mL) delivered from a syringe each over a 20 second duration. The surface washes were combined and the radioactivity determined by scintillation counting using Lumagel (Lumac) as scintillator. Radiolabel retained in the epicuticular wax was subsequently recovered by washing the leaf disc with chloroform (1 mL). The chloroform was removed in a stream of nitrogen, and radioactivity in the wax extracts and surface washes was then determined by liquid scintillation counting (LSC) after addition of'Hisafe 3' scintillant (4 mL). The relative levels of radioactivity between samples formed a direct comparison of the amount of active that was washed off. Uptake was defined as that proportion of chemical not recovered in the MeOH washes.

Higher levels of active can be determined by HPLC-UV spectroscopy using a Perkin Elmer™ Lambda 2 UV/VIS Spectrophotometer and Waters HPLC. Atrazine content of dendrimer based formulations was compared with the atrazine control (without dendrimer) for comparative leaf penetration.

While not wishing to be bound by theory, it is believed that the present formulation of active entity with dendrimer shows a higher percentage of the active entity is retained on the leaf.

### Example 19 (outside scope of the invention): Use of PEHAM dendrimers to enhance an active entity's stability when exposed to sunlight

A 5 mL solution of a standard formulation of the agrochemical active entity and PEHAM dendrimer (prepared in Example 15) above was placed in a glass petri dish and exposed to daylight for 2, 4 and 8 h. The UV radiation was monitored in real time on the ARPANSA website. The UV flux over 8 h was put at 100% and the 2 and 4 hour exposure calculated as a percentage from the ARPANSA record.

After the appropriate time interval (2, 4, 8 h), the relevant dishes were removed, rinsed and analyzed by HPLC for the residual active ingredient and breakdown products.

While not wishing to be bound by theory, it is believed that the present formulation of active entity with dendrimer shows a higher percentage of the active is present; thus it is protected from UV damage. Although one active entity was tested without showing favorable results, it is believed this formulation should be effective with other active entities. Active entities that will be tested are Azoxystrobin, Fipronil, trifluralin and Tebuconazole.

### Example 20: Soil adherence/soil penetration assay of an agriculturally active entity in the presence of PEHAM dendrimers

As an initial trial, test columns (approximately 8 cm diameter, 10 cm length) of fine sand containing 10% moisture were treated with 10 mL of aqueous active and 1 mL of 5% dendrimer. Control columns containing no dendrimer were also prepared.

The columns were subjected to 1 day of leaching with the solutions containing the active. After this time each column was treated with an additional 10 mL of water to promote movement of active in the soil column. After the three days the columns were split into three horizontal sections and each section is assayed by HPLC or GLC for active content so that a vertical profile can be constructed for the soil column. Comparison of the levels of active entity in the water eluent verses the amounts retained in the soil provide an assessment of the relative level of soil adherence versus penetration with and without PEHAM dendrimer.

While not wishing to be bound by theory, it is believed that the present formulations with dendrimer and active entity will increase soil penetration such that the active entity will reach the plant roots or under soil parts of plants.

### Example 21 (outside scope of invention): Dendrimer-copper complex formation and enhanced leaf retention/water fastness

A stock 1% copper sulfate solution was prepared by dissolving 10 g of copper sulphate in 1 L of water. A series of four solutions were prepared by adding either 0 mg (0.0% w/v), 25 mg (0.1% w/v), 50 mg (1.0% w/v) or 500 mg (10.0% w/v) of PEHAM dendrimer to 5 mL of the stock copper sulfate solution prepared above. These complexes were briefly exposed to ultrasonication, then incubated overnight at 37°C and 100 rpm in a shaking water bath, and allowed to equilibrate at RT for 1 h. The dendrimer- copper sulfate active suspensions were filtered through a Whatman filter to remove any solid content. The samples were analyzed for copper using standard processes.

The various PEHAM dendrimer-copper sulfate formulations, prepared above, were applied to plant leaves (3-5 weeks old) and incubated for 24 h in a greenhouse. After 24 h, leaves were gently washed with 10 mL of water while collecting all the wash water. The combined wash water was analyzed for copper content by UV spectroscopy using a Perkin Elmer™ Lambda 2 UV/VIS Spectrophotometer. Alternatively low levels of copper can be detected by inductively coupled plasma atomic emission spectroscopy. Copper content of dendrimer based formulations was compared with control (copper alone).

While not wishing to be bound by theory, use of copper with dendrimer in the present formulations has less of the copper washed off the leaf and so a higher percentage of the active copper is retained on the leaf. The copper is used as a fungicide on grapes. Thus less application (amount and frequency) of the copper is desired for the environment while still providing protection as a fungicide for the grapes.

## Claims

1. A formulation for use in agriculture comprising a dendrimer of the structure: 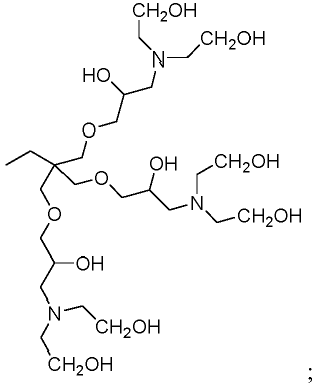 and
associated with at least one agriculturally active entity selected from the atrazine and glyphosate; and
at least one agriculturally-acceptable diluent or carrier is present; and wherein the efficacy or duration of activity of the agriculturally active entity is increased.

2. The formulation of claim 1 wherein the formulation is in the form of an agriculturally-acceptable powder, dust, granule, liquid, concentrate, suspension, emulsion, spray, gel, or aerosol.

3. A method for treating plants or seeds with a formulation as claimed in claim 1 wherein the efficacy or duration of activity of the agriculturally active entity is increased.

4. The method of claim 5 wherein the formulation improves adhesion of the agriculturally active entity to plant surfaces.

5. The method of claim 5 wherein the formulation improves water-fastness of the agriculturally active entity adherent to the plant or seed.

6. The method of claim 5 wherein the formulation improves penetration of the agriculturally active entity into plant tissues of the plant or seed.

## Patentansprüche

1. Formulierung zur landwirtschaftlichen Nutzung, umfassend ein Dendrimer der folgenden Struktur: 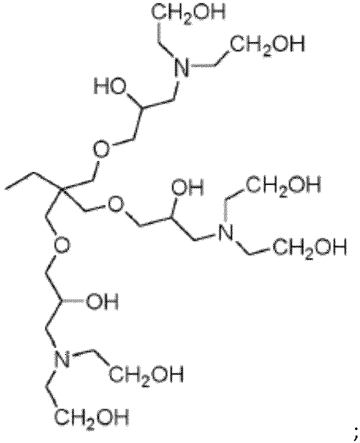 und
die mindestens einer landwirtschaftlich aktiven Entität zugeordnet ist, ausgewählt aus Atrazin und Glyphosat; und
wobei mindestens ein landwirtschaftlich akzeptables Verdünnungsmittel oder Träger vorhanden ist; und wobei die Wirksamkeit oder Wirkungsdauer der landwirtschaftlich aktiven Entität erhöht wird.

2. Formulierung nach Anspruch 1, wobei die Formulierung in der Form eines landwirtschaftlich akzeptablen Pulvers, Staubs, Granulats, Flüssigkeit, Konzentrats, Suspension, Emulsion, Sprays, Gels oder Aerosols vorliegt.

3. Verfahren zur Behandlung von Pflanzen oder Samen mit einer Formulierung nach Anspruch 1, wobei die Wirksamkeit oder Wirkungsdauer der landwirtschaftlich aktiven Entität erhöht wird.

4. Verfahren nach Anspruch 5, wobei die Formulierung die Haftung der landwirtschaftlich aktiven Entität an Pflanzenoberflächen verbessert.

5. Verfahren nach Anspruch 5, wobei die Formulierung die Wasserbeständigkeit der an der Pflanze oder dem Samen haftenden landwirtschaftlich aktiven Entität verbessert.

6. Verfahren nach Anspruch 5, wobei die Formulierung die Penetration der landwirtschaftlich aktiven Entität in Pflanzengewebe der Pflanze oder des Samens verbessert.

## Revendications

1. Formulation à utiliser en agriculture comprenant un dendrimère de structure : 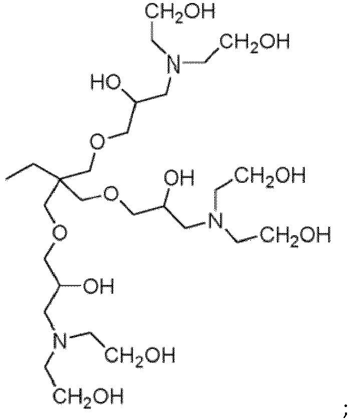 et
associé à au moins un agent actif sur le plan agricole choisie parmi l'atrazine et le glyphosate ; et
au moins un diluant ou support acceptable sur le plan agricole est présent ; et
dans lequel l'efficacité ou la durée d'activité de l'agent actif sur le plan agricole est augmentée.

2. Formulation selon la revendication 1, dans laquelle la formulation est sous la forme d'une poudre, d'une poussière, d'un granule, d'un liquide, d'un concentré, d'une suspension, d'une émulsion, d'une pulvérisation, d'un gel, ou d'un aérosol acceptable sur le plan agricole.

3. Procédé de traitement de plantes ou de graines avec une formulation telle que revendiquée dans la revendication 1, dans lequel l'efficacité ou la durée d'activité de l'agent actif sur le plan agricole est augmentée.

4. Procédé selon la revendication 5, dans lequel la formulation améliore l'adhésion de l'agent actif sur le plan agricole à des surfaces végétales.

5. Procédé selon la revendication 5, dans lequel la formulation améliore la résistance à l'eau de l'agent actif sur le plan agricole adhérant à la plante ou à la graine.

6. Procédé selon la revendication 5, dans lequel la formulation améliore la pénétration de l'agent actif sur le plan agricole dans des tissus végétaux de la plante ou de la graine.
